# EUROPEAN PATENT APPLICATION

(11) **EP 4 776 025 A1**
(43) Date of publication of application: **15.07.2026**
(21) Application number: 25217462.8
(22) Date of filing: 20.11.2025
(51) Int. Cl.: G01S 7/4863, G01S 17/894, H04N 25/77

(54) **TIME OF FLIGHT PIXEL, TIME OF FLIGHT SENSOR, AND OPERATION METHOD OF TIME OF FLIGHT SENSOR**

(30) Priority: 09.01.2025 KR 20250003621; 29.08.2025 US 202519315016
(71) Applicant: Samsung Electronics Co., Ltd., Suwon-si, Gyeonggi-do 16677 (KR)
(72) Inventor: OH, Youngsun, 16677 Suwon-si (KR)
(74) Representative: Marks & Clerk LLP

(57) **Abstract**

A time of flight (ToF) pixel includes a photodiode (PD) that receives a reflected light reflected from a target object and generates photo charges based on the reflected light, plural tap circuits that store the photo charges during different time periods, and a photodiode drain circuit (PDC) that electrically connects the photodiode (PD) with a power supply voltage (VDD) when a storage node of the tap circuits is saturated.

## Description

### BACKGROUND

Embodiments of the present disclosure described herein relate to a distance sensor, and more particularly, relate to a time of flight (ToF) pixel, a ToF sensor including the ToF pixel, and an operation method of the ToF sensor.

A light detection and ranging (LADAR) system is used in various fields such as autonomous driving, security, sensor, monitoring, etc. An electronic device in which the LADAR system is implemented may include a time of flight (ToF) sensor. The ToF sensor may emit a light signal to an object, and the light signal may be reflected from the object. The ToF sensor may calculate a distance from the object by measuring an arrival time of a light signal reflected from an object after the light signal is emitted to the object.

A distance range capable of being identified by the ToF sensor may be limited due to various factors. As an example, the distance range capable of being identified by the ToF sensor may be limited by such factors as a maximum modulation frequency of a light emitted to a target object, interference by ambient light, signal noise, and a full well capacity (FWC) of a sensor.

### SUMMARY

It is an aspect to provide a ToF pixel having improved reliability and improved performance, a ToF sensor including the ToF pixel, and an operation method of the ToF sensor.

According to an aspect of one or more embodiments, there is provided a time of flight (ToF) pixel comprising, a photodiode configured to receive a reflected light and to generate photo charges based on (or in response to) the reflected light; a first tap circuit connected to the photodiode and including a first storage node that stores the photo charges during a first time period; a second tap circuit connected to the photodiode and including a second storage node that stores the photo charges during a second time period different from the first time period; a first transfer gate connected to the first tap circuit, and configured to operate based on (or in response to) a first transfer signal; a second transfer gate connected to the second tap circuit, and configured to operate based on (or in response to) a second transfer signal; a first readout circuit connected to the first transfer gate, and configured to output a first output voltage corresponding to a level of the first storage node; and a photodiode drain circuit configured to electrically connect the photodiode with a power supply voltage based on the level of the first storage node and a level of the second storage node.

According to another aspect of one or more embodiments, there is provided a time of flight (ToF) sensor comprising a light generator configured to generate an emission light having a first frequency; a ToF pixel configured to receive a reflected light from a reflection of the emission light by a target object and to output a first output voltage and a second output voltage based on the reflected light; and a sensor controller configured to control the light generator and the ToF pixel and to detect a distance to the target object based on the first output voltage and the second output voltage. The ToF pixel may include a photodiode configured to generate photo charges based on the reflected light; a first tap circuit that is connected to the photodiode and includes a first storage node that stores the photo charges during a first time period; a second tap circuit that is connected to the photodiode and includes a second storage node that stores the photo charges during a second time period different from the first time period; a first transfer gate that is connected to the first tap circuit and operates based on a first transfer signal; a second transfer gate that is connected to the second tap circuit and operates based on second transfer signal; and a photodiode drain circuit configured to electrically connect the photodiode with a power supply voltage based on a level of the first storage node or a level of the second storage node. The first output voltage corresponds to the level of the first storage node, and the second output voltage corresponds to the level of the second storage node.

According to yet another aspect of one or more embodiments, there is provided an operation method of a time of flight (ToF) sensor which includes a ToF pixel including a plurality of tap circuits, the operation method comprising receiving a reflected light reflected from a target object; storing photo charges corresponding to the reflected light in a plurality of storage nodes included in the plurality of tap circuits, based on a plurality of photo signals included in the reflected light; electrically connecting a photodiode of the ToF pixel with a power supply voltage in response to a level of at least one of the plurality of storage nodes being lower than a reference voltage; and detecting a distance to the target object based on a plurality of output voltages corresponding respectively to the plurality of storage nodes.

According to still another aspect of one or more embodiments, there is provided a time of flight (ToF) pixel comprising a photodiode configured to receive a reflected light reflected from a target object and to generate photo charges based on the reflected light; a plurality of tap circuits configured to store the photo charges during different time periods; and a photodiode drain circuit configured to electrically connect the photodiode with a power supply voltage when at least one of a plurality of storage nodes of the plurality of tap circuits is saturated.

At least some of the above and other features of the invention are set out in the claims.

### BRIEF DESCRIPTION OF THE FIGURES

The above and other aspects will become apparent by describing in detail embodiments thereof with reference to the accompanying drawings, in which:
FIG. 1 is a block diagram illustrating a time of flight (ToF) sensor according to an embodiment;
FIG. 2 is a diagram illustrating a ToF pixel array of the ToF sensor of FIG. 1, according to an embodiment;
FIG. 3 is a circuit diagram illustrating a ToF pixel included in the ToF pixel array of FIG. 1, according to an embodiment;
FIGS. 4 and 5 are diagrams for describing an operation of the ToF pixel of FIG. 3, according to an embodiment;
FIG. 6 is a circuit diagram illustrating a first ToF pixel according to an embodiment;
FIG. 7 is a flowchart illustrating an operation of a ToF sensor including the first ToF pixel of FIG. 6, according to an embodiment;
FIG. 8 is a diagram for describing an operation of the first ToF pixel of FIG. 6, according to an embodiment;
FIGS. 9A and 9B are graphs for describing an effect of the first ToF pixel of FIG. 6, according to an embodiment;
FIGS. 10 to 16 are circuit diagrams illustrating the first ToF pixel of FIG. 6 in detail, according to an embodiment;
FIGS. 17 and 20 is circuit diagrams illustrating ToF pixels according to an some embodiments;
FIGS. 21 and 22 are diagrams illustrating a stacked structure of a ToF sensor, according to an embodiment;
FIG. 23 is a diagram illustrating a ToF pixel included in the ToF sensor of FIG. 22, according to an embodiment;
FIG. 24 is a diagram illustrating a pixel array according to an embodiment;
FIG. 25 is a block diagram illustrating a pixel according to an embodiment; and
FIG. 26 is a diagram illustrating a system to which a sensor according to an embodiment is applied.

### DETAILED DESCRIPTION

Below, various embodiments will be described in detail and clearly to such an extent that an ordinary one in the art easily carries out the present disclosure.

The terms, which are used below, such as "block", "unit", and "module" or components corresponding thereto, or functional blocks or circuits in drawings may be implemented in the form of software, hardware, or a combination thereof, which is configured to perform or process various functions, operations, or features described in the detailed description.

Below, when various components are listed by using the conjunction "or", the term "or" may refer to each of the listed components or a combination of at least some of the listed components. For example, "A, B, or C" may refer to A, B, and C respectively or may refer to a combination of A and B, a combination of B and C, a combination of A and C, or a combination of A, B, and C. As used in this specification, a phrase using the form "at least one of A, B, or C" includes within its scope "only A", "only B", "only C", "A and B", "A and C", "B and C" and "A, B, and C."

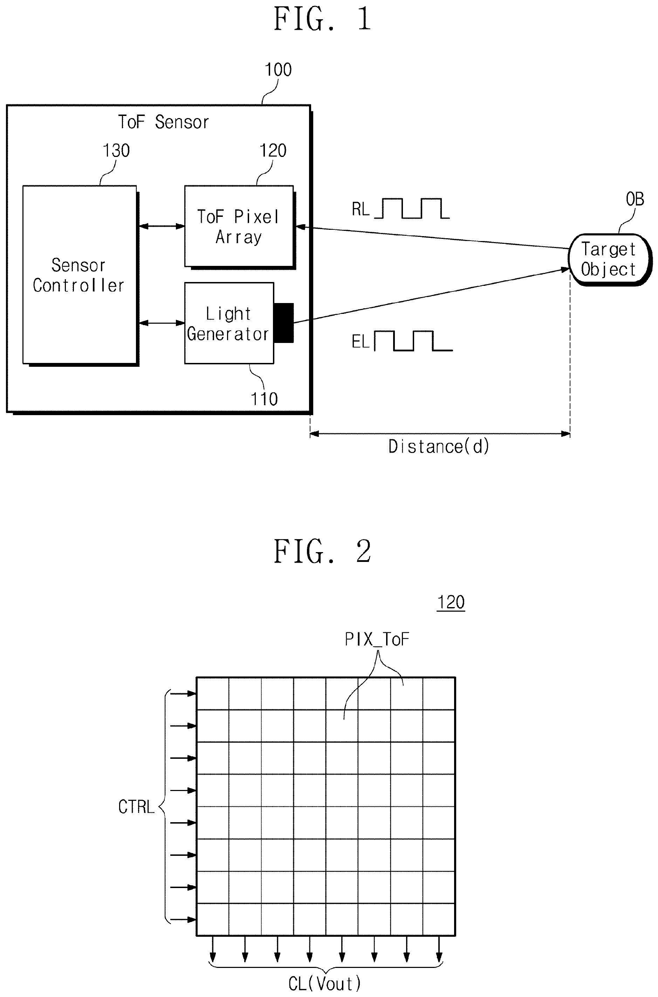

FIG. 1 is a block diagram illustrating a time of flight (ToF) sensor according to an embodiment. FIG. 2 is a diagram illustrating a ToF pixel array of the ToF sensor of FIG. 1, according to an embodiment. Referring to FIGS. 1 and 2, a ToF sensor 100 may include a light generator 110, a ToF pixel array 120, and a sensor controller 130. In an embodiment, the ToF sensor 100 may detect a distance "d" to a target object OB, based on an emission light EL and a reflected light RL. In an embodiment, the ToF sensor 100 may detect the distance "d" to the target object OB, based on a direct ToF manner or an indirect ToF manner. The direct ToF manner may refer to a manner of detecting the distance "d" to the target object OB by directly calculating time information from a time point at which the emission light EL is emitted to a time point at which the reflected light RL is received. The indirect ToF manner may refer to a manner of detecting the distance "d" to the target object BO by calculating a phase difference of the emission light EL and the reflected light RL and indirectly calculating time information based on the calculated phase difference. In an embodiment, the ToF sensor 100 may detect the distance "d" to the target object OB based on the indirect ToF manner. However, the scope of the present disclosure is not limited thereto.

The light generator 110 may be configured to emit the emission light EL. In an embodiment, the light generator 110 may include a laser diode or a light emitting diode configured to output the emission light EL. In an embodiment, the emission light EL may be a modulated pulse light having a frequency. In an embodiment, the frequency may be preset. Below, to describe various embodiments, the description will be given based on the emission light EL being a continuous wave (CW) having a frequency. In an embodiment, the continuous wave may be a light signal such as a sinusoidal wave or may be a light signal toggling with the frequency. Below, for convenience of description, it is assumed that an emission light is a continuous wave of a light signal toggling with a frequency. However, the scope of the present disclosure is not limited thereto. For example, the emission light EL may be a pulse light which is generated depending on a time point or frequency. In an embodiment, the time point may be preset. The light generator 110 may emit the emission light EL to the target object OB.

The ToF pixel array 120 may include a plurality of ToF pixels PIX_ToF. For example, as illustrated in FIG. 2, the plurality of ToF pixels PIX_ToF may be arranged in row directions and column directions. Each of the plurality of ToF pixels PIX_ToF may receive the reflected light RL reflected from the target object OB. Each of the plurality of ToF pixels PIX_ToF may store photo charges corresponding to the reflected light RL in a plurality of tap circuits in response to a control signal CTRL. Each of the plurality of ToF pixels PIX_ToF may output, through a plurality of column lines CL, output signals Vout corresponding to the photo charges stored in the plurality of tap circuits in response to the control signal CTRL. The detail structure of the plurality of ToF pixels PIX_ToF will be described below with reference to the following drawings.

The sensor controller 130 may be configured to control the operation of the ToF sensor 100. The sensor controller 130 may calculate the distance "d" to the target object OB based on a signal corresponding to the amount of charges stored in the tap circuits of each of the plurality of ToF pixels PIX_ToF. For example, because the reflected light RL is a signal corresponding to the emission light EL reflected from the target object OB, the reflected light RL and the emission light EL may have a phase difference. Depending on the phase difference of the reflected light RL and the emission light EL, the amounts of charges stored in the tap circuits of each of the plurality of ToF pixels PIX_ToF may be different. The sensor controller 130 may calculate the phase difference of the reflected light RL and the emission light EL based on the amounts of charges in the tap circuits of each of the plurality of ToF pixels PIX_ToF, and the distance "d" to the target object OB may be calculated based on the calculated phase differences. In an embodiment, the sensor controller 130 may include various logic circuits (e.g., a ramp generator and an analog-to-digital converter (ADC)) configured to generate various control signals CTRL for controlling the plurality of ToF pixels PIX_ToF included in the ToF pixel array 120 or to perform an analog-to-digital conversion operation or a correlated double sampling operation on output voltages output from the plurality of ToF pixels PIX_ToF.

In an embodiment, the distance "d" (i.e., a maximum identifiable distance or a minimum identifiable distance) to the target object OB, which is capable of being measured by the ToF sensor 100, may be determined by various factors. For example, the magnitude of the reflected light RL may be proportional to the square of the distance "d" to the target object OB with respect to the emission light EL. That is, as the distance "d" to the target object OB increases, the magnitude of the reflected light RL may decrease in proportion to the square of the distance "d". Accordingly, when the distance "d" to the target object OB increases beyond a threshold distance, the distance may be far enough away that the reflected light RL is not received or is not normally received. Because the reflected light RL is not normally received, the distance "d" is incapable of being measured. In this situation, the maximum value of the distance "d" capable of being measured may be increased by increasing the magnitude of the emission light EL.

In an embodiment, each of the ToF pixels PIX_ToF of the ToF sensor 100 may include at least two storage nodes. Each of the at least two storage nodes may be configured to store photo charges corresponding to the reflected light RL. In this case, when the magnitude of the reflected light RL is great, photo charges may exceed a full well capacity (FWC) of the storage nodes. Because photo charges exceeding the FWC of the storage nodes are not stored in the storage nodes due to exceeding the FWC, information corresponding to the reflected light RL may be lost. In this case, the distance "d" to the target object OB is incapable of being measured. That is, when the distance "d" to the target object OB decreases, the magnitude of the reflected light RL may become greater. When the distance "d" to the target object OB becomes less than a threshold distance, the photo charges corresponding to the reflected light RL may exceed the FWC of the ToF pixels PIX_ToF and may therefore become unable to be stored. In other words, when the magnitude of the reflected light RL becomes greater, the minimum value of the measurable distance "d" may increase.

As described above, to increase the maximum value of the measurable distance "d", it may be possible to increase the magnitude of the emission light EL. However, in this case, because the magnitude of the reflected light RL also increases, the minimum value of the measurable distance "d" may increase. In this case, a distance to a close target object OB is not able to be normally measured. Alternatively, to decrease the minimum value of the measurable distance "d", it may be possible to increase the FWC of the storage nodes of the ToF pixel PIX_ToF. However, in this case, an additional area for increasing the FWC of the storage nodes is required. That is, a distance range in which a related art ToF sensor is capable of measuring the target object OB is limited.

According to various embodiments, each of the plurality of ToF pixels PIX_ToF may include a photodiode drain circuit. The photodiode drain circuit may detect a saturation state of at least one of the plurality of storage nodes of the ToF pixel PIX_ToF and, when at least one of the plurality of storage nodes is saturated, the photodiode drain circuit may be configured to drain photo charges generated by a photodiode of the ToF pixel PIX_ToF.

In this case, when at least one of the plurality of storage nodes is saturated, because the photo charges generated by the photodiode are not transferred to the plurality of storage nodes, each of the plurality of storage nodes may maintain information corresponding to the reflected light RL. That is, even though the intensity of the emission light EL is increased to detect an increased distance "d" to a distant target object OB, the identifiable minimum value of the distance "d" to the target object OB may be decreased. That is, the distance "d" to a close target object OB may be normally identified. Accordingly, the identifiable effective range (i.e., the minimum detectable distance to the maximum detectable distance) of the ToF sensor 100 may increase.

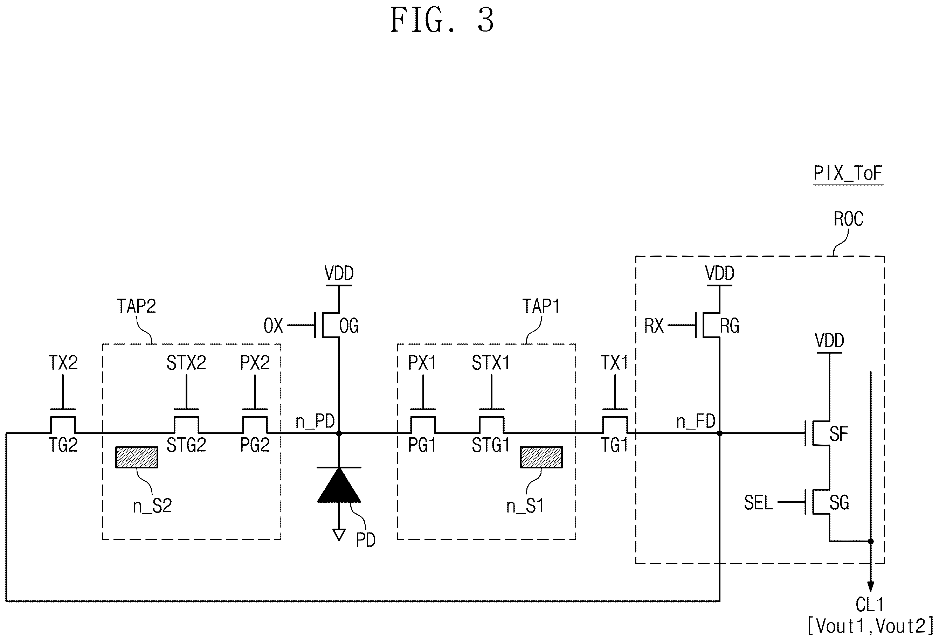

FIG. 3 is a circuit diagram illustrating a ToF pixel included in a ToF pixel array of FIG. 1, according to an embodiment. For convenience of description, in the following drawings, embodiments will be described based on one ToF pixel. However, the scope of the present disclosure is not limited thereto. For example, it will be understood that each of a plurality of ToF pixels included in a ToF pixel array may be similar in structure to the one ToF pixel described below and illustrated in the following drawings.

Below, the term "gate" may be used to refer to, for example, a transistor included in the ToF pixel. For example, an NMOS transistor configured to reset a level of a floating diffusion node (hereinafter referred to as an "FD node") n_FD of the ToF pixel PIX_ToF may be referred to as a "reset gate RG". That is, the term "gate" used herein may refer, for example, to a transistor configured to perform a specific function.

Referring to FIGS. 1 and 3, the ToF pixel PIX_ToF includes a photodiode PD, a first tap circuit TAP1, a second tap circuit TAP2, a first transfer gate TG1, a second transfer gate TG2, a readout circuit ROC, and may include an overflow gate OG.

The photodiode PD may be connected between a photodiode node n_PD and a ground voltage. The photodiode PD may be configured to generate photo charges in response to a light incident from the outside. For example, the photodiode PD may be configured to generate photo charges in response to the reflected light RL reflected from the target object OB.

The first tap circuit TAP1 may be connected between the photodiode node n_PD and the first transfer gate TG1. The first tap circuit TAP1 may be configured to store or accumulate the photo charges generated by the photodiode PD in a first storage node n_S1 in response to a first photo signal PX1 and a first storage transfer signal STX1.

For example, the first tap circuit TAP1 may include a first photo gate PG1, a first storage transfer gate STG1, and the first storage node n_S1. The first photo gate PG1 may be connected between the photodiode node n_PD and the first storage transfer gate STG1 and may operate in response to the first photo signal PX1. The first storage transfer gate STG1 may be connected between the first photo gate PG1 and the first transfer gate TG1 and may operate in response to the first storage transfer signal STX1. The first storage node n_S1 may be formed between the first storage transfer gate STG1 and the first transfer gate TG1. The first storage node n_S1 may be configured to accumulate or store the photo charges generated by the photodiode PD.

The second tap circuit TAP2 may be connected between the photodiode node n_PD and the second transfer gate TG2. The second tap circuit TAP2 may be configured to store or accumulate the photo charges generated by the photodiode PD in a second storage node n_S2 in response to a second photo signal PX2 and a second storage transfer signal STX2.

For example, the second tap circuit TAP2 may include a second photo gate PG2, a second storage transfer gate STG2, and the second storage node n_S2. The second photo gate PG2 may be connected between the photodiode node n_PD and the second storage transfer gate STG2 and may operate in response to the second photo signal PX2. The second storage transfer gate STG2 may be connected between the second photo gate PG2 and the second transfer gate TG2 and may operate in response to the second storage transfer signal STX2. The second storage node n_S2 may be formed between the second storage transfer gate STG2 and the second transfer gate TG2. The second storage node n_S2 may be configured to accumulate or store the photo charges generated by the photodiode PD.

In an embodiment, the photo charges stored in the first storage node n_S1 and the second storage node n_S2 may vary depending on the phase difference of the reflected light RL and the emission light EL. That is, the phase difference of the reflected light RL and the emission light EL may be calculated based on the photo charges stored in the first storage node n_S1 and the second storage node n_S2.

The first transfer gate TG1 may be connected between the first tap circuit TAP1 and the FD node n_FD and may operate in response to a first transfer signal TX1. For example, in response to the first transfer signal TX1, the first transfer gate TG1 may transfer the photo charges stored in the first storage node n_S1 of the first tap circuit TAP1 to the FD node n_FD.

The second transfer gate TG2 may be connected between the second tap circuit TAP2 and the FD node n_FD and may operate in response to a second transfer signal TX2. For example, in response to the second transfer signal TX2, the second transfer gate TG2 may transfer the photo charges stored in the second storage node n_S2 of the second tap circuit TAP2 to the FD node n_FD.

The readout circuit ROC may be configured to output, through a first column line CL1, output voltages Vout1 and Vout2 corresponding to the level of the FD node n_FD in response to a selection signal SEL. For example, the readout circuit ROC may include a source follower SF and a select gate SG. The source follower SF may be connected between a power supply voltage VDD and the select gate SG and may operate in response to the level of the FD node n_FD. The select gate SG may be connected between the source follower SF and the first column line CL1 and may operate in response to the selection signal SEL.

In an embodiment, when the photo charges corresponding to the first storage node n_S1 of the first tap circuit TAP1 are stored in the FD node n_FD, the first output voltage Vout1 may be output through the first column line CL1, and when the photo charges corresponding to the second storage node n_S2 of the second tap circuit TAP2 are stored in the FD node n_FD, the second output voltage Vout2 may be output through the second column line CL2. A difference between the photo charges stored in the first and second storage nodes n_S1 and n_S2, that is, the phase difference of the reflected light RL and the emission light EL may be calculated based on a level difference of the first and second output voltages Vout1 and Vout2.

The readout circuit ROC may be configured to reset the FD node n_FD to a level corresponding to the power supply voltage VDD in response to a reset signal RX. For example, the readout circuit ROC may include a reset gate RG. The reset gate RG may be connected between the FD node FD node n_FD and the power supply voltage VDD and may operate in response to the reset signal RX. For example, the reset gate RG may be turned on in response to the reset signal RX, and thus, the FD node n_FD may be reset to the level corresponding to the power supply voltage VDD.

The overflow gate OG may be connected between the photodiode node n_PD and the power supply voltage VDD and may operate in response to an overflow signal OX. For example, the overflow gate OG may connect the photodiode node n_PD with the power supply voltage VDD in response to the overflow signal OX. In this case, the photo charges generated by the photodiode PD may be discharged through the power supply voltage VDD.

In an embodiment, the overflow signal OX may be driven at various time points depending on a driving method of the ToF sensor 100. For example, in some embodiments when the ToF sensor 100 uses the emission light EL which is based on a continuous wave, the overflow signal OX may be activated after an accumulation time for the ToF pixel is terminated (i.e., after a plurality of periods for the emission light EL pass). In some embodiments when the ToF sensor 100 uses the emission light EL which is based on a pulse light, the overflow signal OX may be activated after one period of the emission light EL is completed.

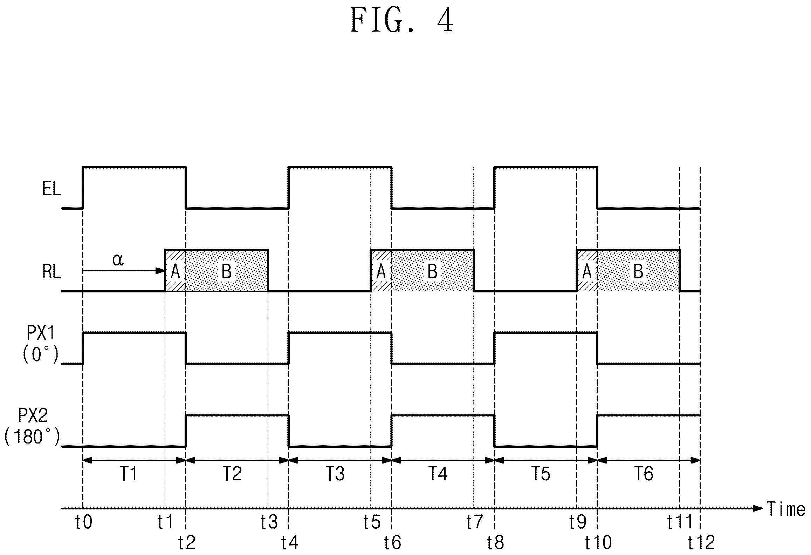

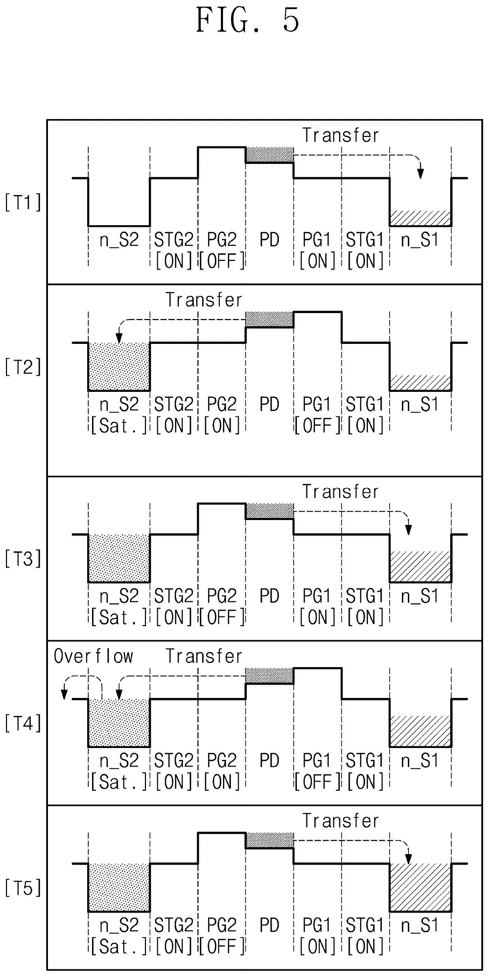

FIGS. 4 and 5 are diagrams for describing an operation of the ToF pixel of FIG. 3, according to an embodiment. For convenience of description, an operation associated with the first and second tap circuits TAP1 and TAP2 of the ToF pixel PIX_ToF will be described, and the detailed description associated with the remaining components or control signals will be omitted to avoid redundancy and for conciseness. However, the scope of the present disclosure is not limited thereto.

Below, for convenience of description, the term "ta-tb time period" is used. In this case, "ta" indicates an a-th time point, and "tb" indicates a b-th time point. The ta-tb time period may indicate a time period from the a-th time point to the b-th time point.

Referring to FIGS. 1 and 3 to 5, the ToF sensor 100 may emit the emission light EL having a first frequency to the target object OB. The ToF sensor 100 may receive the reflected light RL reflected from the target object OB. In this case, depending on the distance "d" to the target object OB, the reflected light RL may have a phase difference of α, compared to the emission light EL. For example, the emission light EL may be emitted in a t0-t2 time period, a t4-t6, and a t8-t10 time period. The reflected light RL may have the phase difference of α, compared to the emission light EL, and thus, the reflected light RL may be received in a t1-t3 time period, a t5-t7 time period, and a t9-t11 time period.

In response to the first and second photo signals PX1 and PX2, the ToF pixel PIX_ToF of the ToF sensor 100 may store or accumulate photo charges corresponding to the reflected light RL in the first and second storage nodes n_S1 and n_S2.

In an embodiment, the first and second photo signals PX1 and PX2 may be generated based on the frequency of the emission light EL. For example, the first photo signal PX1 may be a pulse signal having a first frequency. The second photo signal PX2 may be a pulse signal having a phase difference of 180 degrees with the first photo signal PX1. That is, during a first time period T1, the first photo signal PX1 may be at the high level, and the second photo signal PX2 may be at the low level. During a second time period T2, the first photo signal PX1 may be at the low level, and the second photo signal PX2 may be at the high level. Likewise, during third and fifth time periods T3 and T5, the first photo signal PX1 may be at the high level, and the second photo signal PX2 may be at the low level. During fourth and sixth time periods T4 and T6, the first photo signal PX1 may be at the low level, and the second photo signal PX2 may be at the high level.

In an embodiment, a phase difference of photo signals may be determined depending on the number of tap circuits included in the ToF pixel. For example, when the ToF pixel includes four tap circuits, the four tap circuits may operate respectively in response to four photo signals. In this case, the four photo signals may have a phase difference of 90 degrees.

During the first time period T1 where the first photo signal PX1 is at the high level, the photo charges generated by the photodiode PD may be stored in the first storage node n_S1 of the first tap circuit TAP1. For example, the photodiode PD may generate photo charges in the t1-t3, t5-t7, and t9-t11 time periods in which the reflection light RL is received. In this case, a time period where the photo charges are generated by the photodiode PD in the first time period T1 where the first photo signal PX1 is at the high level may be the t1-t2 time period, which is marked by "A". That is, during the first time period T1 where the first photo signal PX1 is at the high level, the photo charges corresponding to the "A" region are stored in the first storage node n_S1.

During the second time period T2 where the second photo signal PX2 is at the high level, the photo charges generated by the photodiode PD may be stored in the second storage node n_S2 of the second tap circuit TAP2. For example, a time period where the photo charges are generated by the photodiode PD in the second time period T2 where the second photo signal PX2 is at the high level may be the t2-t3 time period, which is marked by "B". That is, during the second time period T2 where the second photo signal PX2 is at the high level, the photo charges corresponding to the "B" region are stored in the second storage node n_S2. Likewise, photo charges corresponding to each of the t5-t6 time period and the t9-t10 time period may be stored in the first storage node n_S1, and photo charges corresponding to each of the t6-t7 time period and the t10-t11 time period may be stored in the second storage node n_S2. The phase difference of α may be calculated based on a ratio (i.e., A/B) of the photo charges stored in the first and second storage nodes n_S1 and n_S2.

In an embodiment, when the reflected light RL is strong, the first storage node n_S1 and/or the second storage node n_S2 may be saturated. In this case, the ratio (i.e., A/B) of the photo charges stored in the first and second storage nodes n_S1 and n_S2 is not accurately calculated.

For example, as illustrated in FIG. 5, in the first time period T1, the first photo gate PG1, the first storage transfer gate STG1, and the second storage transfer gate STG2 may be turned on, and the second photo gate PG2 may be turned off. In this case, as described above, during the t1-t2 time period, the photodiode PD may generate photo charges, and the generated photo charges may be transferred to the first storage node n_S1.

Afterwards, in the second time period T2, the second photo gate PG2, the first storage transfer gate STG1, and the second storage transfer gate STG2 may be turned on, and the first photo gate PG1 may be turned off. In this case, as described above, during the t2-t3 time period, the photodiode PD may generate photo charges, and the generated photo charges may be transferred to the second storage node n_S2. When the reflected light RL is strong, the second storage node n_S2 may be saturated by the photo charges transferred during the t2-t3 time period.

Afterwards, in the third time period T3, the first photo gate PG1, the first storage transfer gate STG1, and the second storage transfer gate STG2 may be turned on, and the second photo gate PG2 may be turned off. In this case, as described above, during the t5-t6 time period, the photodiode PD may generate photo charges, and the generated photo charges may be transferred to the first storage node n_S1.

Afterwards, in the fourth time period T4, the second photo gate PG2, the first storage transfer gate STG1, and the second storage transfer gate STG2 may be turned on, and the first photo gate PG1 may be turned off. In this case, as described above, during the t6-t7 time period, the photodiode PD may generate photo charges, and the generated photo charges may be transferred to the second storage node n_S2. However, because the second storage node n_S2 was already saturated in the second time period T2, the photo charges transferred during the t6-t7 time period may flow over the second storage node n_S2. That is, the photo charges transferred during the t6-t7 time period need not be stored in the second storage node n_S2.

Afterwards, in the fifth time period T5, the first photo gate PG1, the first storage transfer gate STG1, and the second storage transfer gate STG2 may be turned on, and the second photo gate PG2 may be turned off. In this case, as described above, during the t5-t6 time period, the photodiode PD may generate photo charges, and the generated photo charges may be transferred to the first storage node n_S1.

As described above, during the operation of the ToF pixel PIX_ToF, when the second storage node n_S2 is saturated, photo charges to be stored in the second storage node n_S2 may be lost. In this case, a phase difference is incapable of being calculated based on the photo charges stored in the first and second storage nodes n_S1 and n_S2. That is, when the reflected light RL is strong or when the target object OB is close, due to the saturation of the first and second storage nodes n_S1 and n_S2, the distance "d" to the target object OB is not calculated, or is inaccurately calculated.

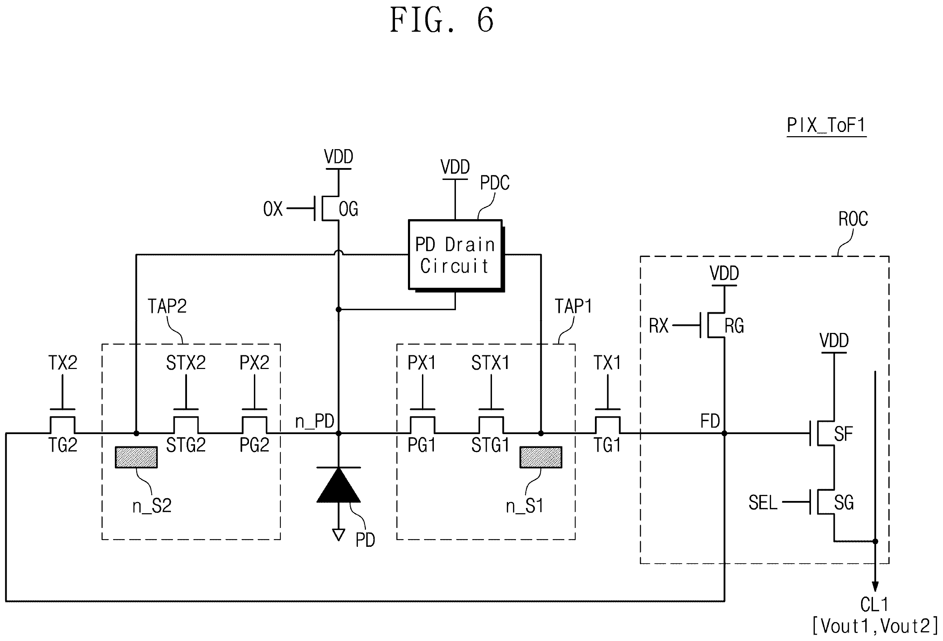

FIG. 6 is a circuit diagram illustrating the ToF pixel according to an embodiment. For convenience of description, additional description associated with the components described above will be omitted to avoid redundancy and for conciseness. Referring to FIGS. 1, 2, and 6, a first ToF pixel PIX_ToF1 may include the photodiode PD, the first tap circuit TAP1, the second tap circuit TAP2, the first transfer gate TG1, the second transfer gate TG2, the readout circuit ROC, the overflow gate OG, and a photodiode drain circuit PDC. The first tap circuit TAP1 may include the first photo gate PG1, the first storage transfer gate STG1, and the first storage node n_S1. The second tap circuit TAP2 may include the second photo gate PG2, the second storage transfer gate STG2, and the second storage node n_S2. The remaining components of the first ToF pixel PIX_ToF1 other than the photodiode drain circuit PDC are similar to those described with reference to FIG. 3, and thus, additional description will be omitted to avoid redundancy and for conciseness.

The photodiode drain circuit PDC may detect a saturation state of the first storage node n_S1 and/or the second storage node n_S2. The photodiode drain circuit PDC connects the photodiode node n_PD to the power supply voltage VDD in response to the saturation state of the first storage node n_S1 and/or the second storage node n_S2. In this case, photo charges generated by the photodiode PD are drained to the power supply voltage VDD without being introduced or transferred to the first storage node n_S1 and/or the second storage node n_S2. Accordingly, the first storage node n_S1 and/or the second storage node n_S2 may maintain the previously stored photo charges. Because the photo charges of the first storage node n_S1 and/or the second storage node n_S2 are not lost, a phase difference may be calculated based on the photo charges stored in the first storage node n_S1 and the second storage node n_S2.

A configuration and an operation method of the photodiode drain circuit PDC will be described in detail with reference to the following drawings.

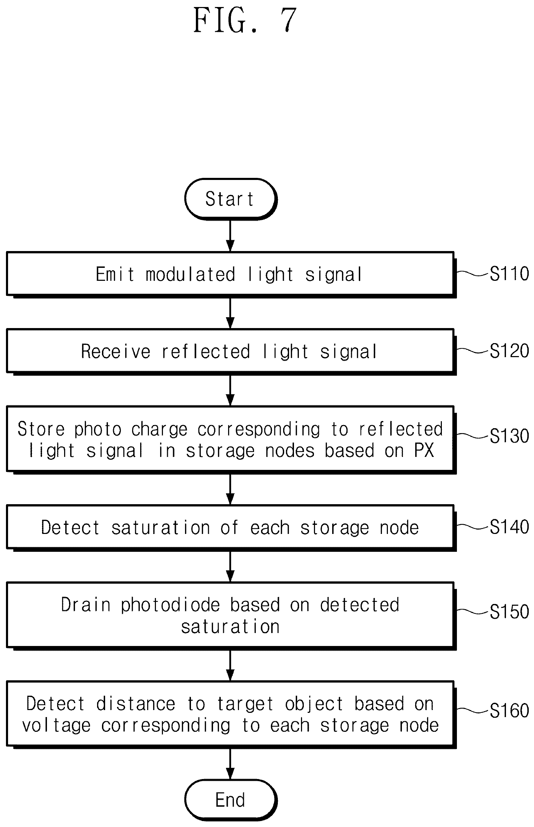

FIG. 7 is a flowchart illustrating an operation of a ToF sensor including the first ToF pixel of FIG. 6, according to an embodiment. Referring to FIGS. 1, 6, and 7, in operation S110, the ToF sensor 100 may emit a modulated light signal as the emission light EL. For example, the ToF sensor 100 may modulate a light signal based on a frequency. In an embodiment, the frequency may be preset. The modulated light signal may be output through the light generator 110. In an embodiment, the modulated light signal may be a modulated continuous wave signal or a modulated pulse signal.

In operation S120, the ToF sensor 100 may receive the reflected light RL reflected from the target object OB. In an embodiment, the reflected light RL may have a phase difference, compared to the emission light EL.

In operation S130, the ToF sensor 100 may store photo charges corresponding to the reflected light RL in storage nodes, based on the photo signal PX. For example, as described with reference to FIGS. 3 to 6, the photodiode PD of the first ToF pixel PIX_ToF1 may generate the photo charges in response to the reflected light RL. In the first ToF pixel PIX_ToF1, the generated photo charges may be stored in the first storage node n_S1 in response to the first photo signal PX1 and may be stored in the second storage node n_S2 in response to the second photo signal PX2. In an embodiment, a ratio of the amount of photo charges stored in the first storage node n_S1 and the amount of photo charges stored in the second storage node n_S2 may be changed depending on the phase difference of the reflected light RL and the emission light EL.

In operation S140, in an embodiment, the ToF sensor 100 may detect a saturation state of each storage node. In some embodiments, the photodiode drain circuit PDC of the first ToF pixel PIX_ToF1 of the ToF sensor 100 may detect a voltage of the first storage node n_S1 and/or a voltage of the second storage node n_S2. As the photo charges are stored in each of the first storage node n_S1 and the second storage node n_S2, the voltage of each of the first storage node n_S1 and the second storage node n_S2 may decrease. In this case, the voltage of at least one of the first storage node n_S1 or the second storage node n_S2 may be lower than a reference voltage. That the voltage of at least one of the first storage node n_S1 or the second storage node n_S2 is lower than the reference voltage may mean that at least one of the first storage node n_S1 or the second storage node n_S2 is in the saturation state. The photodiode drain circuit PDC may detect that the voltage of at least one of the first storage node n_S1 or the second storage node n_S2 is lower than the reference voltage. In an embodiment, an operation in which the photodiode drain circuit PDC detects the saturation state of the storage node will be described in detail with reference to the following drawings.

In operation S150, the ToF sensor 100 may drain the photo charges generated by the photodiode PD in response to the detected saturation state. For example, the photodiode drain circuit PDC of the first ToF pixel PIX_ToF1 of the ToF sensor 100 may electrically connect the photodiode node n_PD to the power supply voltage VDD in response to the detected saturation state. In this case, the photo charges generated by the photodiode PD may be drained to the power supply voltage VDD. According to the above description, photo charges need not be introduced to the first storage node n_S1 and/or the second storage node n_S2 any longer, and the ratio of the photo charges stored in the first and second storage nodes n_S1 and n_S2 may be maintained. In other words, through the photo charges stored in the first and second storage nodes n_S1 and n_S2, information about the phase difference of the reflected light RL and the emission light EL may be calculated, or the phase difference may be calculated.

In operation S160, the ToF sensor 100 may calculate the distance "d" to the target object OB, based on output voltages respectively corresponding to the first and second storage nodes n_S1 and n_S2. As described above, the ratio of the photo charges stored in the first and second storage nodes n_S1 and n_S2 indicates the phase difference of the reflected light RL and the emission light EL. That is, the sensor controller 130 of the ToF sensor 100 may calculate the phase difference of the reflected light RL and the emission light EL based on the ratio of the photo charges stored in the first and second storage nodes n_S1 and n_S2 and may calculate the distance "d" to the target object OB based on the calculated phase difference.

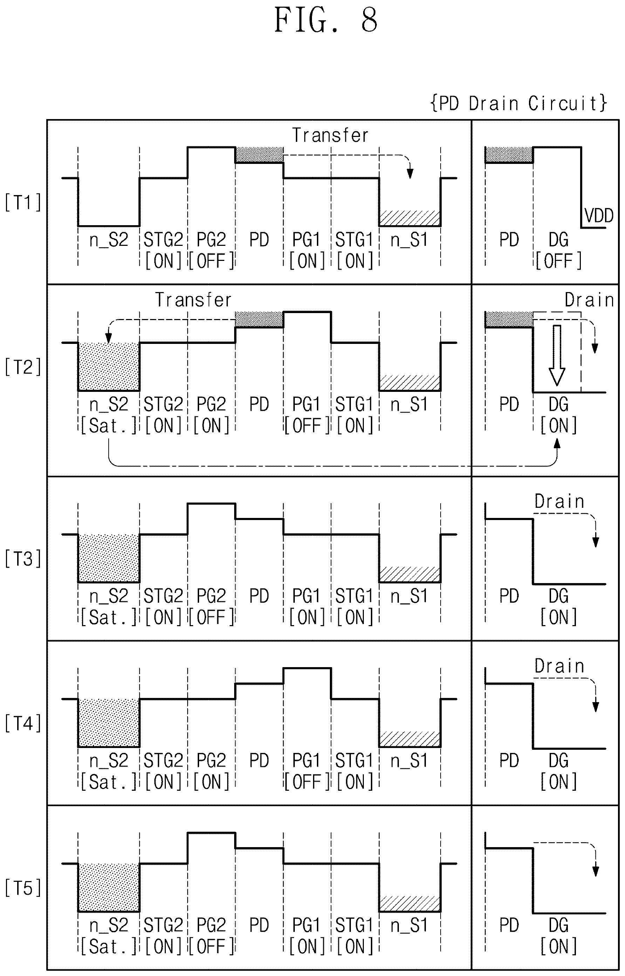

FIG. 8 is a diagram for describing an operation of the first ToF pixel of FIG. 6, according to an embodiment. For convenience of description, it is assumed that the first ToF pixel PIX_ToF1 of FIG. 6 operates in response to the emission light EL, the reflected light RL, the first photo signal PX1, and the second photo signal PX2 of FIG. 4.

Referring to FIGS. 4, 6, and 8, in the first time period T1, the first photo gate PG1, the first storage transfer gate STG1, and the second storage transfer gate STG2 may be turned on, and the second photo gate PG2 may be turned off. In this case, as described above, during the t1-t2 time period, the photodiode PD may generate photo charges, and the generated photo charges may be transferred to the first storage node n_S1.

In an embodiment, as will be described later, the photodiode drain circuit PDC may include a drain gate DG connected between the photodiode node n_PD and the power supply voltage VDD. A structure of the drain gate DG will be described below in detail with reference to the following drawings. In the first time period T1, because the drain gate DG is in the turn-off state, the photo charges generated by the photodiode PD may be transferred to the first storage node n_S1.

During the second time period T2, the second photo gate PG2, the first storage transfer gate STG1, and the second storage transfer gate STG2 may be turned on, and the first photo gate PG1 may be turned off. In this case, as described above, during the t2-t3 time period, the photodiode PD may generate photo charges, and the generated photo charges may be transferred to the second storage node n_S2.

In an embodiment, during the second time period T2, the second storage node n_S2 may be saturated. The photodiode drain circuit PDC may detect the saturation state of the second storage node n_S2 and may turn on the drain gate DG in response to the detected saturation state. In this case, the photodiode node n_PD is connected to the power supply voltage VDD, and thus, the photo charges generated by the photodiode PD are drained to the power supply voltage VDD.

During the third time period T3, the first photo gate PG1, the first storage transfer gate STG1, and the second storage transfer gate STG2 may be turned on, and the second photo gate PG2 may be turned off. In this case, as described above, during the t5-t6 time period, the photodiode PD may generate photo charges, and the generated photo charges may be transferred to the first storage node n_S1. However, because the drain gate DG is in the turn-on state due to the saturation of the second storage node n_S2, the photo charges generated by the photodiode PD may be drained to the power supply voltage VDD. That is, during the third time period T3, the photo charges need not be transferred to the first storage node n_S1. In this case, the first storage node n_S1 may maintain the previously stored photo charges. In an embodiment, when the photodiode PD is connected to the power supply voltage VDD, the first storage node n_S1 may also be electrically connected to the power supply voltage VDD. However, as illustrated in FIG. 8, because the potential of the first storage transfer gate STG1 is higher than the potential of the first storage node n_S1, the first storage transfer gate STG1 may prevent the photo charges stored in the first storage node n_S1 from being drained to the power supply voltage VDD. That is, even though the photodiode PD is connected to the power supply voltage VDD, the photo charges of the first storage node n_S1 may be maintained.

During the fourth time period T4, the second photo gate PG2, the first storage transfer gate STG1, and the second storage transfer gate STG2 may be turned on, and the first photo gate PG1 may be turned off. Like the third time period T3 described above, because the photo charges generated by the photodiode PD are drained to the power supply voltage VDD, the second storage node n_S2 may maintain the previous stored photo charges. This operation is similar to the operation described in the third time period T3, and thus, additional description will be omitted to avoid redundancy.

During the fifth time period T5, the first photo gate PG1, , the first storage transfer gate STG1, and the second storage transfer gate STG2 may be turned on, and the second photo gate PG2 may be turned off. Like the third and fourth time periods T3 and T4 described above, because the photo charges generated by the photodiode PD are drained to the power supply voltage VDD, the first storage node n_S1 may maintain the previous stored photo charges.

In an embodiment, when any one of the first storage node n_S1 and the second storage node n_S2 is saturated, the photodiode drain circuit PDC may turn on the drain gate DG to electrically connect the photodiode node n_PD and the power supply voltage VDD. In this case, because the photo charges generated by the photodiode PD are drained through the power supply voltage VDD, after any one of the first storage node n_S1 and the second storage node n_S2 is saturated, the photo charges need not be transferred to the first and second storage nodes n_S1 and n_S2. That is, the ratio of the photo charges stored in the first and second storage nodes n_S1 and n_S2 may be maintained. Accordingly, the phase difference of the reflected light RL and the emission light EL or the distance "d" to the target object OB may be calculated based on the ratio of the photo charges stored in the first and second storage nodes n_S1 and n_S2.

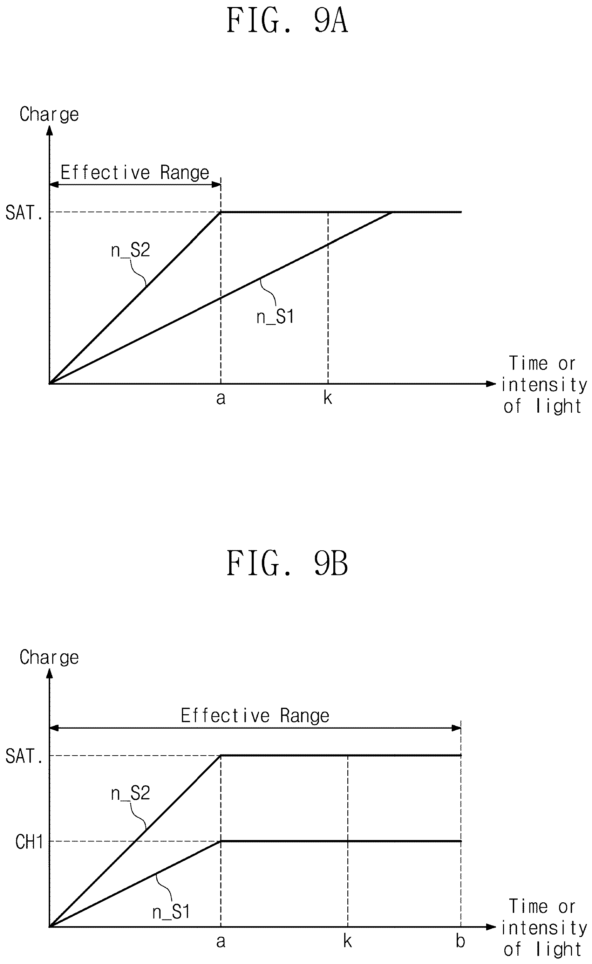

FIGS. 9A and 9B are graphs for describing an effect of the first ToF pixel according to some embodiments. In the graphs of FIGS. 9A and 9B, the horizontal axis represents a time or the intensity of light (e.g., the intensity of reflected light RL), and the vertical axis represents the amount of charges (e.g., the amount of photo charges) stored in each storage node. The graph of FIG. 9A shows an effective range (i.e., a measurable distance range or a time range) for the ToF pixel PIX_ToF of FIG. 3, and the graph of FIG. 9B shows an effective range (i.e., a measurable distance range or a time range) for the ToF pixel PIX_ToF of FIG. 6.

First, referring to FIGS. 3 and 9A, the second storage node n_S2 of the ToF pixel PIX_ToF of FIG. 3 may be saturated at an a-th point. In this case, even though the second storage node n_S2 is saturated at the a-th point, the photo charge accumulation operation on the first storage node n_S1 may be continued. According to the above description, after the a-th point, the photo charges accumulated in the first storage node n_S1 may continuously increase. In this case, because the ratio of photo charges of the first and second storage nodes n_S1 and n_S2 is maintained up to the a-th point, a distance to the target object OB is incapable of being normally identified after the a-th point. That is, the effective range of the ToF pixel PIX_ToF of FIG. 3 may be up to the a-th point. For example, at a k-th point following the a-th point, because the second storage node n_S2 is in the saturation state and the first storage node n_S1 continuously accumulate the photo charges, the ratio of photo charges of the first and second storage nodes n_S1 and n_S2 may be different from the ratio before the a-th point (i.e., the ratio within the effective range). That is, after the a-th point at which the second storage node n_S2 is saturated, information about the phase difference of the reflected light RL and the emission light EL may be lost.

Next, referring to FIGS. 6 and 9B, the second storage node n_S2 of the ToF pixel PIX_ToF of FIG. 6 may be saturated at the a-th point. In this case, as described above, in response to the saturation state of the second storage node n_S2, the photodiode node n_PD may be electrically connected to the power supply voltage VDD. According to the above description, the photo charges generated by the photodiode PD may be drained to the power supply voltage VDD, and the first and second storage nodes n_S1 and n_S2 may maintain the stored photo charges. In this case, even though the second storage node n_S2 is saturated, the ratio of photo charges of the first and second storage nodes n_S1 and n_S2 may be uniformly maintained, and thus, the information about the phase difference may be normally calculated. That is, the effective range of the first ToF pixel PIX_ToF of FIG. 6 may be up to a b-th point following the a-th point at which the second storage node n_S2 is saturated or may exceed the b-th point. As an example, at the k-th point following the a-th point at which the second storage node n_S2 is saturated, the ToF pixel PIX_ToF of FIG. 3 fails to maintain the photo charges of the first and second storage nodes n_S1 and n_S2. In contrast, in an embodiment, at the k-th point following the a-th point at which the second storage node n_S2 is saturated, the first ToF pixel PIX_ToF1 of FIG. 6 may maintain the photo charges of the first and second storage nodes n_S1 and n_S2. Accordingly, even though the target object OB is placed close to the ToF sensor 100 or the intensity of reflected light RL is strong, the distance "d" to the target object OB may be calculated normally.

As described above, even though any one of the first storage node n_S1 and the second storage node n_S2 is saturated, the ToF sensor 100 may accurately calculate the distance "d" to the target object OB. That is, even though the target object OB is placed close to the ToF sensor 100, the ToF sensor 100 may calculate the distance "d" to the target object OB. In some embodiments, even though the magnitude of the emission light EL is increased to identify the target object OB placed distant from the ToF sensor 100 or the distance "d", the minimum distance capable of being identified may be maintained. Accordingly, the identifiable distance range of the ToF sensor 100 may increase.

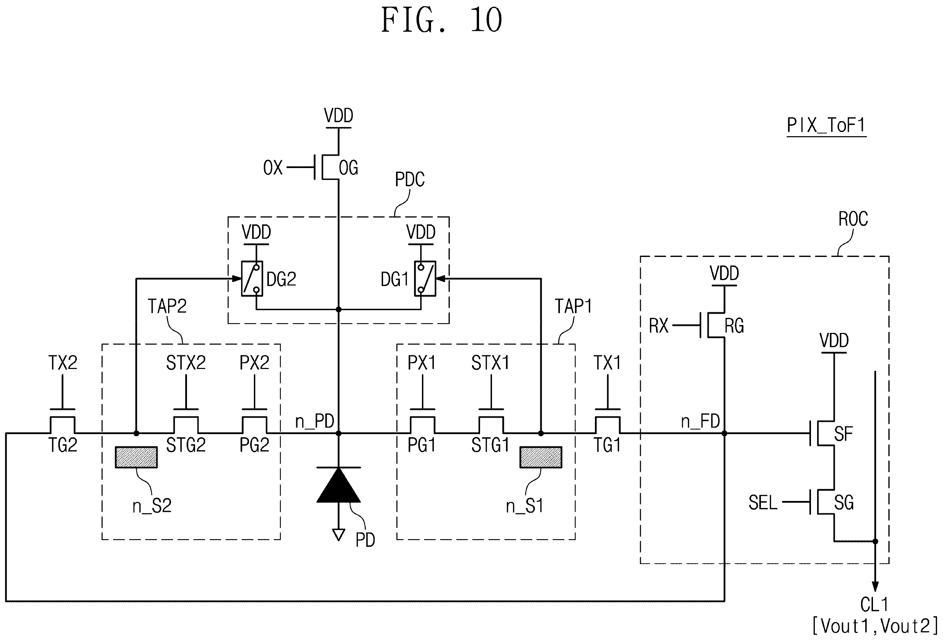

FIGS. 10 to 16 are circuit diagrams illustrating the first ToF pixel of FIG. 6 in detail, according to some embodiments. For convenience of description, additional description associated with the components described above will be omitted to avoid redundancy and for conciseness. ToF pixels to be described below are provided as an example to describe various embodiments more easily, and the scope of the present disclosure is not limited thereto. The ToF pixel according to an embodiment includes a photodiode drain circuit PDC configured to drain photo charges of a photodiode based on a saturation state of a storage node and may be modified in various forms to implement the above configuration or to perform the above function.

Referring to FIG. 10, in an embodiment, the first ToF pixel PIX_ToF1 may include the photodiode PD, the first tap circuit TAP1, the second tap circuit TAP2, the first transfer gate TG1, the second transfer gate TG2, the readout circuit ROC, the overflow gate OG, and the photodiode drain circuit PDC. The detailed configuration and the connection relationship of the first ToF pixel PIX_ToF1 are described above with reference to FIG. 6, and thus, additional description will be omitted to avoid redundancy and for conciseness.

The photodiode drain circuit PDC may include a first drain gate DG1 and a second drain gate DG2. The first drain gate DG1 may be connected between the power supply voltage VDD and the photodiode node n_PD and may operate in response to a level of the first storage node n_S1. For example, the first storage node n_S1 may be configured to store or accumulate the photo charges generated by the photodiode PD. When the first storage node n_S1 is saturated by the photo charges generated by the photodiode PD, the level of the first storage node n_S1 may be lower than the reference voltage. When the level of the first storage node n_S1 is lower than the reference voltage (i.e., when the first storage node n_S1 is saturated), the first drain gate DG1 may be turned on. In this case, the photodiode node n_PD may be electrically connected to the power supply voltage VDD. According to the above description, the photo charges generated by the photodiode PD may be drained to the power supply voltage VDD.

The second drain gate DG2 may be connected between the power supply voltage VDD and the photodiode node n_PD and may operate in response to a level of the second storage node n_S2. For example, the second storage node n_S2 may be configured to store or accumulate the photo charges generated by the photodiode PD. When the second storage node n_S2 is saturated by the photo charges generated by the photodiode PD, the level of the second storage node n_S2 may be lower than the reference voltage. When the level of the second storage node n_S2 is lower than the reference voltage (i.e., when the second storage node n_S2 is saturated), the second drain gate DG2 may be turned on. In this case, the photodiode node n_PD may be electrically connected to the power supply voltage VDD. According to the above description, the photo charges generated by the photodiode PD may be drained to the power supply voltage VDD.

In an embodiment, the first and second drain gates DG1 and DG2 may be implemented in various forms. For example, in some embodiments, the first and second drain gates DG1 and DG2 may be implemented with transistors configured to operate in response to the levels of the first and second storage nodes n_S1 and n_S2, respectively. In some embodiments, the first and second drain gates DG1 and DG2 may be implemented in various forms through any other circuit elements.

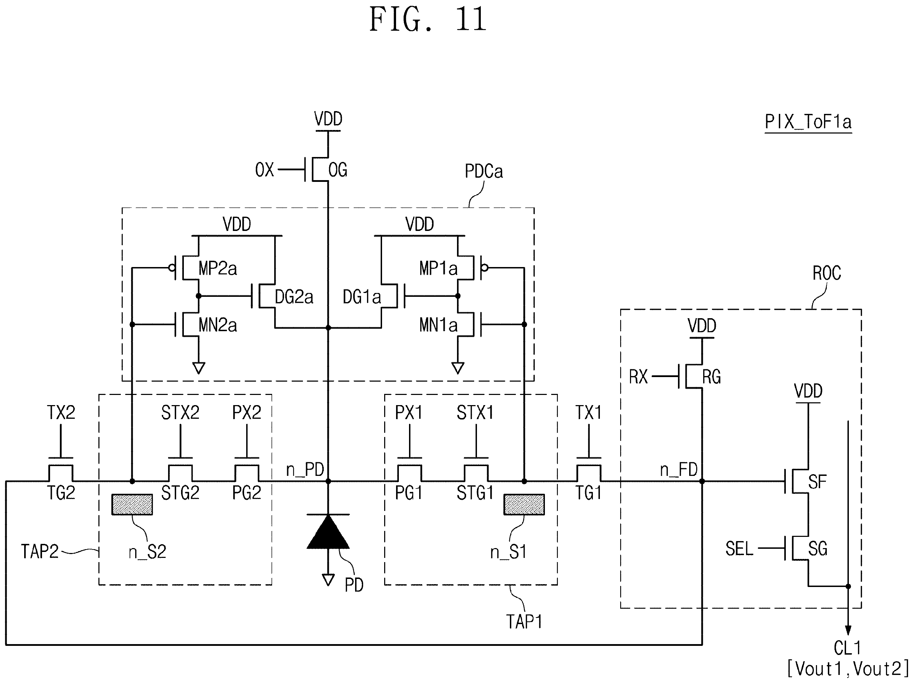

Referring to FIG. 11, in an embodiment, a 1a-th ToF pixel PIX_ToF1a may include the photodiode PD, the first tap circuit TAP1, the second tap circuit TAP2, the first transfer gate TG1, the second transfer gate TG2, the readout circuit ROC, the overflow gate OG, and an a-th photodiode drain circuit PDCa. The detailed configuration and the connection relationship of the 1a-th ToF pixel PIX_ToF1a are described above with reference to FIG. 6, and thus, additional description will be omitted to avoid redundancy and for conciseness.

The a-th photodiode drain circuit PDCa may include a 1a-th PMOS transistor MPla, a 1a-th NMOS transistor MN1a, a 1a-th drain gate DG1a, a 2a-th PMOS transistor MP2a, a 2a-th NMOS transistor MN2a, a 2a-th drain gate DG2a.

The 1a-th PMOS transistor MP1a and the 1a-th NMOS transistor MN1a may be connected in series between the power supply voltage VDD and the ground voltage and may operate in response to a level of the first storage node n_S1. The 1a-th drain gate DG1a may be connected between the power supply voltage VDD and the photodiode node n_PD and may operate in response to a level of an output node between the 1a-th PMOS transistor MP1a and the 1a-th NMOS transistor MN1a.

The 1a-th PMOS transistor MP1a and the 1a-th NMOS transistor MN1a may operate as an inverter configured to invert and output the level of the first storage node n_S1. For example, when the level of the first storage node n_S1 is higher than or equal to a reference level (i.e., when the first storage node n_S1 is not saturated), the 1a-th PMOS transistor MP1a may be turned off, and the 1a-th NMOS transistor MN1a may be turned on. In this case, the level of the output node between the 1a-th PMOS transistor MP1a and the 1a-th NMOS transistor MN1a may correspond to the ground voltage.

When the level of the first storage node n_S1 is lower than the reference level (i.e., when the first storage node n_S1 is saturated), the 1a-th PMOS transistor MP1a may be turned on, and the 1a-th NMOS transistor MN1a may be turned off. In this case, the level of the output node between the 1a-th PMOS transistor MP1a and the 1a-th NMOS transistor MN1a may correspond to the power supply voltage VDD.

When the level of the output node between the 1a-th PMOS transistor MP1a and the 1a-th NMOS transistor MN1a corresponds to the power supply voltage VDD, the 1a-th drain gate DG1a may be turned on, and thus, the photodiode node n_PD may be electrically connected to the power supply voltage VDD. In this case, the photo charges generated by the photodiode PD may be drained to the power supply voltage VDD.

The 2a-th PMOS transistor MP2a and the 2a-th NMOS transistor MN2a may be connected in series between the power supply voltage VDD and the ground voltage and may operate in response to a level of the second storage node n_S2. The 2a-th drain gate DG2a may be connected between the power supply voltage VDD and the photodiode node n_PD and may operate in response to a level of an output node between the 2a-th PMOS transistor MP2a and the 2a-th NMOS transistor MN2a.

The 2a-th PMOS transistor MP2a and the 2a-th NMOS transistor MN2a may operate as an inverter configured to invert and output the level of the second storage node n_S2. For example, when the level of the second storage node n_S2 is higher than or equal to the reference level (i.e., when the second storage node n_S2 is not saturated), the 2a-th PMOS transistor MP2a may be turned off, and the 2a-th NMOS transistor MN2a may be turned on. In this case, the level of the output node between the 2a-th PMOS transistor MP2a and the 2a-th NMOS transistor MN2a may correspond to the ground voltage.

When the level of the second storage node n_S2 is lower than the reference level (i.e., when the second storage node n_S2 is saturated), the 2a-th PMOS transistor MP2a may be turned on, and the 2a-th NMOS transistor MN2a may be turned off. In this case, the level of the output node between the 2a-th PMOS transistor MP2a and the 2a-th NMOS transistor MN2a may correspond to the power supply voltage VDD.

When the level of the output node between the 2a-th PMOS transistor MP2a and the 2a-th NMOS transistor MN2a corresponds to the power supply voltage VDD, the 2a-th drain gate DG2a may be turned on, and thus, the photodiode node n_PD may be electrically connected to the power supply voltage VDD. In this case, the photo charges generated by the photodiode PD may be drained to the power supply voltage VDD.

As described above, the saturation state of the first and second storage nodes n_S1 and n_S2 may be detected by using an inverter implemented with a PMOS transistor and an NMOS transistor, and the photodiode node n_PD may be electrically connected to the power supply voltage VDD depending on the saturation state of the first and second storage nodes n_S1 and n_S2.

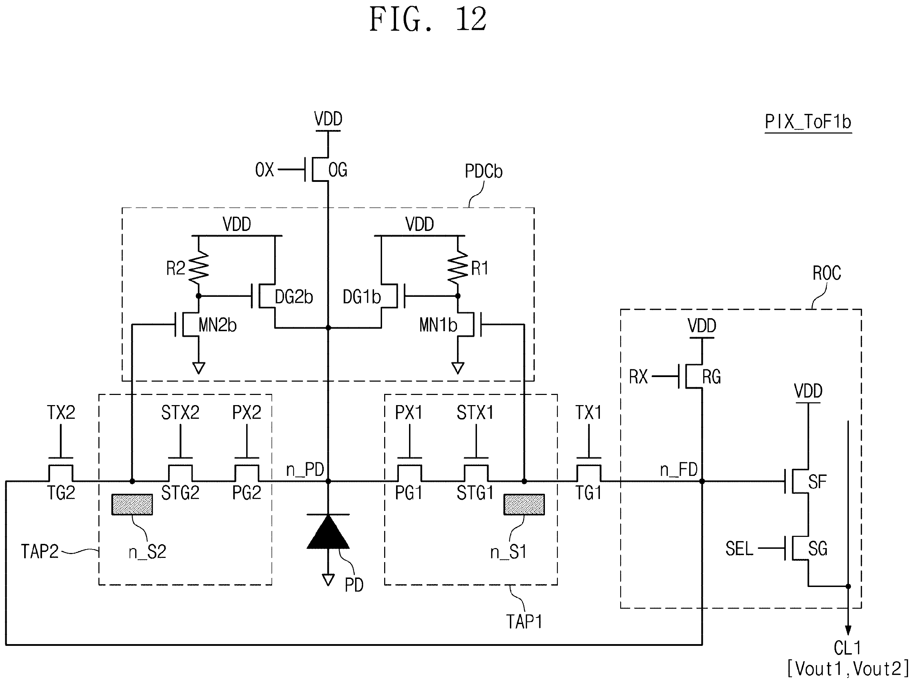

Referring to FIG. 12, in an embodiment, a 1b-th ToF pixel PIX_ToF1b may include the photodiode PD, the first tap circuit TAP1, the second tap circuit TAP2, the first transfer gate TG1, the second transfer gate TG2, the readout circuit ROC, the overflow gate OG, and a b-th photodiode drain circuit PDCb. The detailed configuration and the connection relationship of the 1b-th ToF pixel PIX_ToF1b are described above with reference to FIG. 6, and thus, additional description will be omitted to avoid redundancy and for conciseness.

The b-th photodiode drain circuit PDCb may include a first resistor R1, a 1b-th NMOS transistor MN1b, a 1b-th drain gate DG1b, a second resistor R2, a 2b-th NMOS transistor MN2b, and a 2b-th drain gate DG2b.

The first resistor R1 and the 1b-th NMOS transistor MN1b may be connected in series between the power supply voltage VDD and the ground voltage. The 1b-th NMOS transistor MN1b may operate in response to a level of to the first storage node n_S1. For example, when the level of the first storage node n_S1 is higher than or equal to the reference voltage, the 1b-th NMOS transistor MN1b may be turned on. In this case, a level of an output node between the first resistor R1 and the 1b-th NMOS transistor MN1b may correspond to the ground voltage. When the level of the first storage node n_S1 is lower than the reference voltage, the 1b-th NMOS transistor MN1b may be turned off. In this case, the level of the output node between the first resistor R1 and the 1b-th NMOS transistor MN1b may correspond to the power supply voltage VDD. In response to that the level of the output node between the first resistor R1 and the 1b-th NMOS transistor MN1b corresponds to the power supply voltage VDD, the 1b-th drain gate DG1b may be turned on, and the photodiode node n_PD may be connected to the power supply voltage VDD.

Operations of the second resistor R2, the 2b-th NMOS transistor MN2b, and the 2b-th drain gate DG2b are similar to the operations of the first resistor R1, the 1b-th NMOS transistor MN1b, and the 1b-th drain gate DG1b except that the second resistor R2, the 2b-th NMOS transistor MN2b, and the 2b-th drain gate DG2b operate in response to a level of the second storage node n_S2, and thus, additional description will be omitted to avoid redundancy and for conciseness.

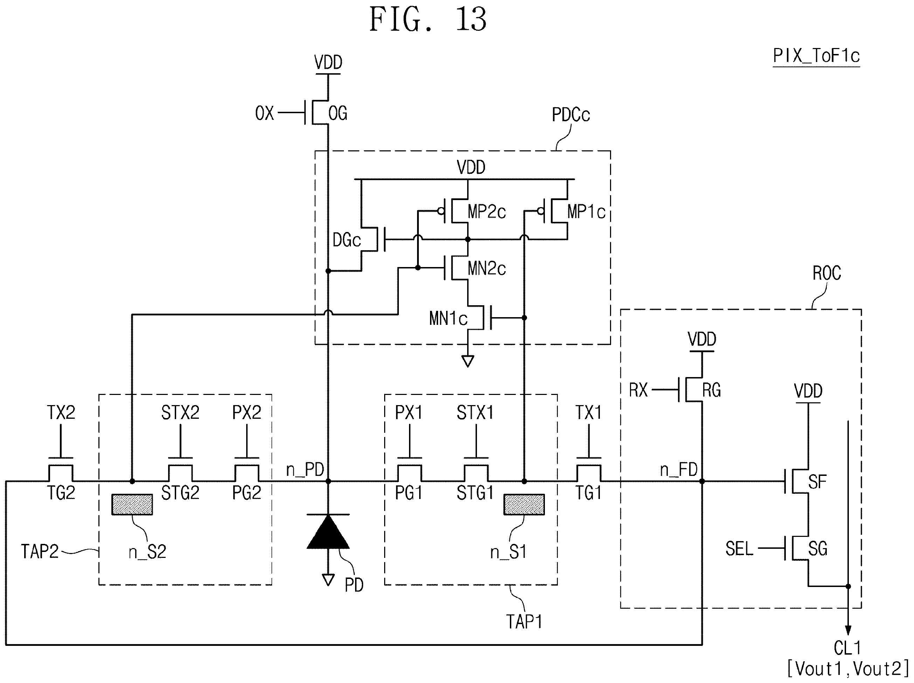

Referring to FIG. 13, in an embodiment, a 1c-th ToF pixel PIX_ToF1c may include the photodiode PD, the first tap circuit TAP1, the second tap circuit TAP2, the first transfer gate TG1, the second transfer gate TG2, the readout circuit ROC, the overflow gate OG, and a c-th photodiode drain circuit PDCa. The detailed configuration and the connection relationship of the 1c-th ToF pixel PIX_ToF1c are described above with reference to FIG. 6, and thus, additional description will be omitted to avoid redundancy and for conciseness.

The c-th photodiode drain circuit PDCc may include a 1c-th PMOS transistor MP1c, a 1c-th NMOS transistor MN1c, a 2c-th PMOS transistor MP2c, a 2c-th NMOS transistor MN2c, and a c-th drain gate DGc.

The 1c-th PMOS transistor MP1c and the 2c-th PMOS transistor MP2c may be connected in parallel between the power supply voltage VDD and an output node. The 1c NMOS MN1c and the 2c-th NMOS transistor MN2c may be connected in series between the output node and the ground voltage. The 1c-th PMOS transistor MP1c and the 1c-th NMOS transistor MN1c may operate in response to a level of the first storage node n_S1, and the 2c-th PMOS transistor MP2c and the 2c-th NMOS transistor MN2c may operate in response to a level of to the second storage node n_S2. The 1c-th PMOS transistor MP1c, the 1c-th NMOS transistor MN1c, the 2c-th PMOS transistor MP2c, and the 2c-th NMOS transistor MN2c may operate as an AND operation circuit for the levels of the first and second storage nodes n_S1 and n_S2. For example, when all the levels of the first and second storage nodes n_S1 and n_S2 are higher than the reference voltage (i.e., when all the first and second storage nodes n_S1 and n_S2 are not saturated), the 1c and 2c-th NMOS transistor MN1c and MN2c are turned on, and the 1c and 2c-th PMOS transistors MP1c and MP2c are turned off. In this case, a level of the output node may correspond to the ground voltage. When the level of at least one of the first and second storage nodes n_S1 and n_S2 are lower than the reference voltage (i.e., when at least one of the first and second storage nodes n_S1 and n_S2 is saturated), at least one corresponding to the saturated storage node from among the 1c and 2c-th NMOS transistor MN1c and MN2c are turned off, and at least one corresponding to the saturated storage node from among the 1c and 2c-th PMOS transistors MP1c and MP2c are turned on. In this case, the level of the output node may correspond to the power supply voltage VDD.

The c-th drain gate DGc may be connected between the power supply voltage VDD and the photodiode node n_PD and may operate in response to the level of the output node. When the level of the output node corresponds to the power supply voltage VDD, the c-th drain gate DGc may be turned on, and thus, the photodiode node n_PD and the power supply voltage VDD may be electrically connected.

In an embodiment, the 1c-th PMOS transistor MP1c and the 2c-th PMOS transistor MP2c of FIG. 13 may be replaced with a resistance element. In this case, instead of the 1c-th PMOS transistor MP1c and the 2c-th PMOS transistor MP2c of FIG. 13, the resistance element may be connected between the power supply voltage VDD and the output node, and the 1c-th PMOS transistor MP1c and the 2c-th NMOS transistor MN2c may be connected in series between the output node and the ground voltage. The 1c-th NMOS transistor MN1c may operate in response to the first storage node n_S1, and the 2c-th NMOS transistor MN2c may operate in response to the second storage node n_S2.

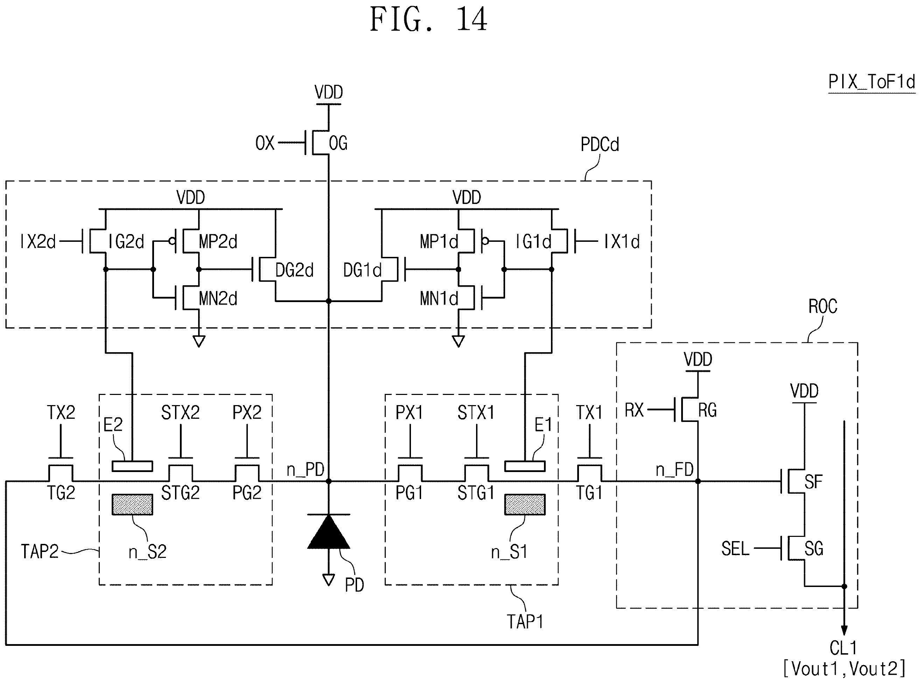

Referring to FIG. 14, in an embodiment, a 1d-th ToF pixel PIX_ToF1d may include the photodiode PD, the first tap circuit TAP1, the second tap circuit TAP2, the first transfer gate TG1, the second transfer gate TG2, the readout circuit ROC, the overflow gate OG, and a d-th photodiode drain circuit PDCd. The detailed configuration and the connection relationship of the 1d-th ToF pixel PIX_ToF1d are described above with reference to FIG. 6, and thus, additional description will be omitted to avoid redundancy and for conciseness.

The d-th photodiode drain circuit PDCd may include a 1d-th PMOS transistor MP1d, a 1d-th NMOS transistor MN1d, a 1d-th drain gate DG1d, a 1d-th initialization gate IG1d, a 2d-th PMOS transistor MP2d, a 2d-th NMOS transistor MN2d, a 2d-th drain gate DG2d, and a 2d-th initialization gate IG2d.

The remaining components of the d-th photodiode drain circuit PDCd other than the 1d-th initialization gate IG1d and the 2d-th initialization gate IG2d are described above, and thus, additional description will be omitted to avoid redundancy and for conciseness.

In an embodiment, the levels of the first and second storage nodes n_S1 and n_S2 may be detected in various manners. For example, as described above, the levels of the first and second storage nodes n_S1 and n_S2 may be provided to the photodiode drain circuit PDC through contacts respectively formed in the first and second storage nodes n_S1 and n_S2.

In an embodiment, as illustrated in FIG. 14, the levels of the first and second storage nodes n_S1 and n_S2 may be provided to the photodiode drain circuit PDC through first and the second electrodes E1 and E2 respectively formed in the first and second storage nodes n_S1 and n_S2.

For example, in an embodiment, the first tap circuit TAP1 may further include the first electrode E1. The first electrode E1 may be formed on the first storage node n_S1. When the level of the first storage node n_S1 changes, a level of the electrode E1 is changed to the level of the first storage node n_S1 by the coupling phenomenon. That is, the level of the first storage node n_S1 may be indirectly detected through the first electrode E1. The second tap circuit TAP2 may further include the second electrode E2. The second electrode E2 may be formed on the second storage node n_S2. As in the above description, the level of the second storage node n_S2 may be indirectly detected through the second electrode E2. The first electrode E1 may be connected to gate electrodes of the 1d-th PMOS transistor MP1d and the 1d-th NMOS transistor MN1d. The second electrode E2 may be connected to gate electrodes of the 2d-th PMOS transistor MP2d and the 2d-th NMOS transistor MN2d. In this case, as in the above description, the 1d-th PMOS transistor MP1d, the 1d-th NMOS transistor MN1d, the 2d-th PMOS transistor MP2d, and the 2d-th NMOS transistor MN2d may operate as an inverter, and each of the 1d-th drain gate DG1d and the 2d-th drain gate DG2d may operate in response to an output node.

In an embodiment, when the first and second storage nodes n_S1 and n_S2 are reset, the photo charges stored in the first and second storage nodes n_S1 and n_S2 may be discharged. In this case, a time taken to discharge the photo charges stored in the first and second storage nodes n_S1 and n_S2 may be delayed due to the voltages of the first and second electrodes E1 and E2. To prevent the above issue, the 1d-th initialization gate IG1d may be connected between the power supply voltage VDD and the first electrode E1 and may operate in response to a 1d-th initialization signal IX1d. The 2d-th initialization gate IG2d may be connected between the power supply voltage VDD and the second electrode E2 and may operate in response to a 2d-th initialization signal IX2d. That is, when the first and second storage nodes n_S1 and n_S2 are reset, the first and second electrodes E1 and E2 may be connected to the power supply voltage VDD through the 1d-th and 2d-th initialization gates IG1d and IG2d. In this case, the discharge time of the photo charges stored in the first and second storage nodes n_S1 and n_S2 may be shortened.

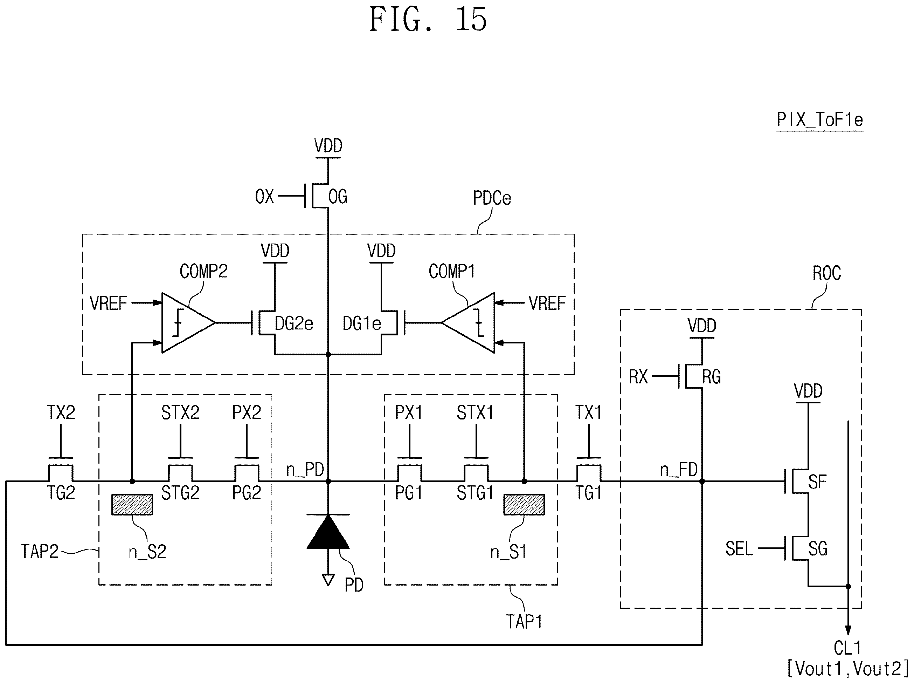

Referring to FIG. 15, in an embodiment, a 1e-th ToF pixel PIX_ToF1e may include the photodiode PD, the first tap circuit TAP1, the second tap circuit TAP2, the first transfer gate TG1, the second transfer gate TG2, the readout circuit ROC, the overflow gate OG, and an e-th photodiode drain circuit PDCe. The detailed configuration and the connection relationship of the 1e-th ToF pixel PIX_ToF1e are described above with reference to FIG. 6, and thus, additional description will be omitted to avoid redundancy for conciseness.

The e-th photodiode drain circuit PDCe may include a first comparator COMP1, a 1e-th drain gate DG1e, a second comparator COMP2, and a 2e-th drain gate DG2e. The first comparator COMP1 may compare a reference voltage VREF and the level of the first storage node n_S1 and may output a comparison result. In an embodiment, when the level of the first storage node n_S1 is higher than the reference voltage VREF, the first comparator COMP1 may output a logic low level; when the level of the first storage node n_S1 is lower than the reference voltage VREF, the first comparator COMP1 may output a logic high level.

The 1e-th drain gate DG1e may operate in response to the output of the first comparator COMP1. For example, when the output of the first comparator COMP1 is at the logic high level (i.e., when the first storage node n_S1 is in the saturation state), the 1e-th drain gate DG1e may be turned on, and thus, the photodiode node n_PD and the power supply voltage VDD may be electrically connected.

The second comparator COMP2 may compare the reference voltage VREF and the level of the second storage node n_S2 and may output a comparison result. The 2e-th drain gate DG2e may operate in response to the output of the second comparator COMP2. Operations of the second comparator COMP2 and the 2e-th drain gate DG2e may be similar to the operations of the first comparator COMP1 and the 1e-th drain gate DG1e except that the second comparator COMP2 and the 2e-th drain gate DG2e operate in response to the level of the second storage node n_S2.

In an embodiment, the first and second comparators COMP1 and COMP2 may be a low-power comparator.

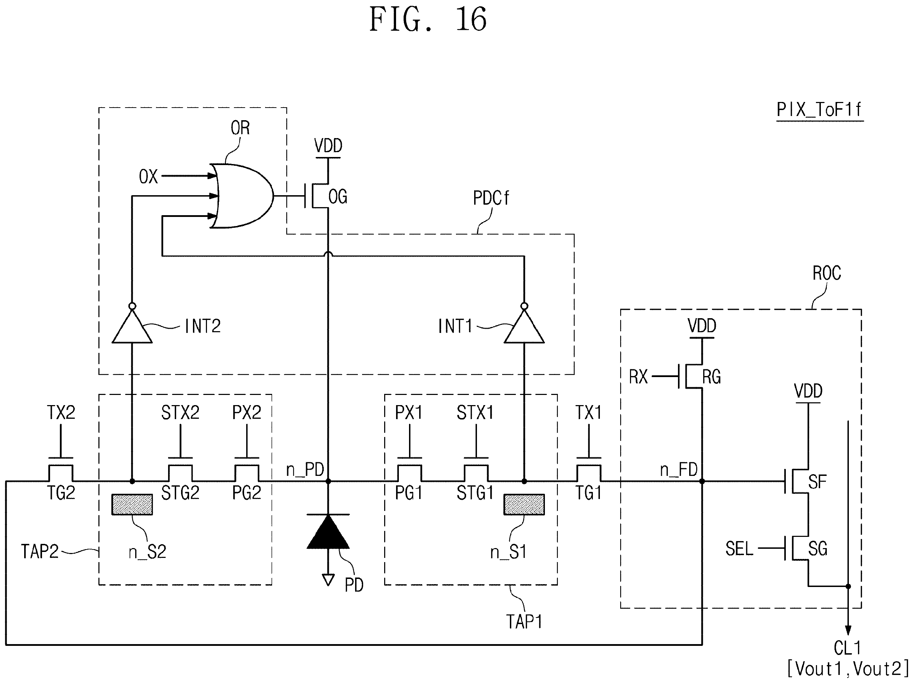

Referring to FIG. 16, in an embodiment, a 1f-th ToF pixel PIX_ToF1f may include the photodiode PD, the first tap circuit TAP1, the second tap circuit TAP2, the first transfer gate TG1, the second transfer gate TG2, the readout circuit ROC, the overflow gate OG, and a f-th photodiode drain circuit PDCf. The detailed configuration and the connection relationship of the 1e-th ToF pixel PIX_ToF1e are described above with reference to FIG. 6, and thus, additional description will be omitted to avoid redundancy and for conciseness.

The f-th photodiode drain circuit PDCf may include a first inverter INT1, a second inverter INT2, and an OR circuit OR. The first inverter INT1 may be configured to invert and output the level of the first storage node n_S1. For example, when the level of the first storage node n_S1 is higher than the reference voltage, the first inverter INT1 may output a signal of the logic low level; when the level of the first storage node n_S1 is lower than the reference voltage, the first inverter INT1 may output a signal of the logic high level. The second inverter INT2 may be configured to invert and output the level of the second storage node n_S2. For example, when the level of the second storage node n_S2 is higher than the reference voltage, the second inverter INT2 may output a signal of the logic low level; when the level of the second storage node n_S2 is lower than the reference voltage, the second inverter INT2 may output a signal of the logic high level.

In an embodiment, the first inverter INT1 may be implemented to be similar to the configuration of the 1a-th PMOS transistor MP1a and the 1a-th NMOS transistor MN1a described with reference to FIG. 11, and the second inverter INT2 may be implemented to be similar to the configuration of the 2a-th PMOS transistor MP2a and the 2a-th NMOS transistor MN2a described with reference to FIG. 11. In some embodiments, the first inverter INT1 may be implemented to be similar to the configuration of the first resistor R1 and the 1b-th NMOS transistor MN1b described with reference to FIG. 12 and the configuration of the second resistor R2 and the 2b-th NMOS transistor MN2b described with reference to FIG. 12.

The OR circuit OR may perform the OR operation on the output of the first inverter INT1, the output of the second inverter INT2, and the overflow signal OX and may output an operation result. For example, when the first storage node n_S1 is not in the saturation state, the output of the first inverter INT1 may be at the logic low level, and when the second storage node n_S2 is not in the saturation state, the output of the second inverter INT2 may be at the logic low level. In this case, when the overflow signal OX is in an inactive state (i.e., has the logic low level), the output of the OR circuit OR may have the logic low level. In response to that the output of the OR circuit OR is at the logic low level, the overflow gate OG is turned off.

When at least one of the first and second storage nodes n_S1 and n_S2 is in the saturation state, at least one of the outputs of the first and second inverters INT1 and INT2 may be at the logic high level. In this case, the output of the OR circuit OR may be at the logic high level, and the overflow gate OG is turned on in response to the output of the OR circuit OR. As the overflow gate OG is turned on, the photodiode node n_PD may be electrically connected to the power supply voltage VDD.

As described above, according to various embodiments, the ToF pixel PIX_ToF may store or accumulate photo charges corresponding to the reflected light in a plurality of storage nodes in response to the photo signals PX. In this case, when at least one of the plurality of storage nodes is in the saturation state, the photodiode drain circuit PDC of the ToF pixel PIX_ToF may connect the photodiode node n_PD and the power supply voltage VDD such that the photo charges generated by the photodiode PD are drained to the power supply voltage VDD. According to the above description, after at least one of the plurality of storage nodes is saturated, because the photo charges generated by the photodiode PD are not transferred to the plurality of storage nodes, the photo charges of each of the plurality of storage nodes may be maintained at a given ratio (i.e., a ratio corresponding to the phase difference or the distance "d"). Accordingly, in various situations in which the target object OB is placed close to the ToF sensor 100, in which the intensity of reflected light RL is strong, or in which the intensity of emission light EL is increased to identify the target object OB placed distant from the ToF sensor 100, the ToF sensor 100 may identify the target object OB normally. In other words, the effective range of the ToF sensor 100 may be improved.

For convenience of description, the above embodiments are described independently of each other, but the scope of the present disclosure is not limited thereto. For example, the various embodiments described above may be implemented independently of each other, or at least two of the above embodiments may be combined. Also, it may be understood that the ToF pixel PIX_ToF according to an embodiment may omit some of the above components or may further include additional components, depending on various pixel structures well known in fields associated with the ToF sensor.

In an embodiment, when any one of the first storage node n_S1 and the second storage node n_S2 is saturated, additional gates (e.g., NMOS transistors) configured to maintain photo charges stored in the first and second storage nodes n_S1 and n_S2 may be respectively provided between the first and second storage nodes n_S1 and n_S2 and the first and second storage transfer gates STG1 and STG2. When any one of the first and second storage nodes n_S1 and n_S2 is saturated, the additional gates may be configured to be turned off.

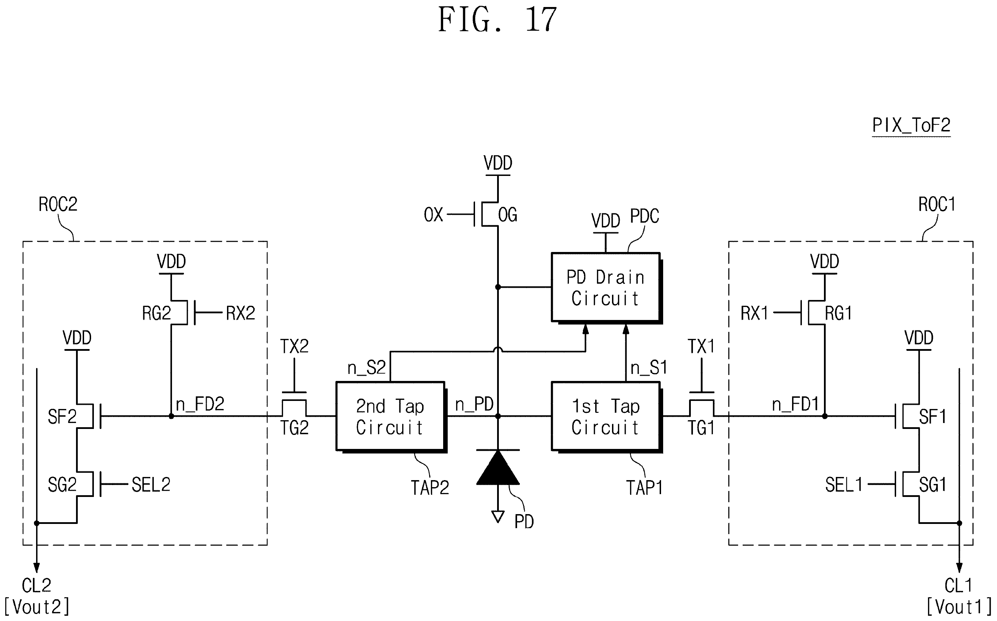

FIGS. 17 to 20 are circuit diagrams illustrating ToF pixels according to some embodiments. For convenience of description, additional description associated with the components described above will be omitted to avoid redundancy and for conciseness. The tap circuits TAP and the photodiode drain circuits PDC to be described in the following drawings correspond to the above components, and thus, additional description will be omitted to avoid redundancy and for conciseness.

First, referring to FIG. 17, in an embodiment, a second ToF pixel PIX_ToF2 may include the photodiode PD, the first tap circuit TAP1, the first transfer gate TG1, a first readout circuit ROC1, the second tap circuit TAP2, the second transfer gate TG2, a second readout circuit ROC2, the overflow gate OG, and the photodiode drain circuit PDC.

The first tap circuit TAP1 may be connected between the photodiode node n_PD and the first transfer gate TG1. As described above, the first tap circuit TAP1 may be configured to store or accumulate the photo charges generated by the photodiode PD in the first storage node n_S1 in response to the first photo signal PX1.

The first transfer gate TG1 may be connected between the photodiode node n_PD and a first FD node n_FD1 and may operate in response to the first transfer signal TX1. The first readout circuit ROC1 may output the first output voltage Vout1 corresponding to the first FD node n_FD1 to the first column line CL1 in response to a first selection signal SEL1. For example, the first readout circuit ROC1 may include a first source follower SF1 and a first select gate SG1. The first source follower SF1 may be connected between the power supply voltage VDD and the first select gate SG1 and may operate in response to a level of the first FD node n_FD1. The first select gate SG1 may be connected between the first source follower SF1 and the first column line CL1 and may operate in response to the first selection signal SEL1.

The first readout circuit ROC1 may reset the first FD node n_FD1 with the level corresponding to the power supply voltage VDD in response to a first reset signal RX1. For example, the first readout circuit ROC1 may include a first reset gate RG1. The first reset gate RG1 may be connected between the power supply voltage VDD and the first FD node n_FD1 and may operate in response to the first reset signal RX1.

The second tap circuit TAP2 may be connected between the photodiode node n_PD and the second transfer gate TG2. As described above, the second tap circuit TAP2 may be configured to store or accumulate the photo charges generated by the photodiode PD in the second storage node n_S2 in response to the second photo signal PX2.

The second transfer gate TG2 may be connected between the photodiode node n_PD and a second FD node n_FD2 and may operate in response to the second transfer signal TX2. The second readout circuit ROC2 may output the second output voltage Vout2 corresponding to the second FD node n_FD2 through a second column line CL2 in response to a second selection signal SEL2. For example, the second readout circuit ROC2 may include a second source follower SF2 and a second select gate SG2. The second source follower SF2 may be connected between the power supply voltage VDD and the second select gate SG2 and may operate in response to a level of the second FD node n_FD2. The second select gate SG2 may be connected between the second source follower SF2 and the second column line CL2 and may operate in response to the second selection signal SEL2.

The second readout circuit ROC2 may reset the second FD node n_FD2 with the level corresponding to the power supply voltage VDD in response to a second reset signal RX2. For example, the second readout circuit ROC2 may include a second reset gate RG2. The second reset gate RG2 may be connected between the power supply voltage VDD and the second FD node n_FD2 and may operate in response to the second reset signal RX2.

The overflow gate OG may be connected between the power supply voltage VDD and the photodiode node n_PD and may operate in response to the overflow signal OX.

The photodiode drain circuit PDC may be configured to electrically connect the photodiode node n_PD and the power supply voltage VDD, based on the level of the saturation state of the first storage node n_S1 of the first tap circuit TAP1 or the second storage node n_S2 of the second tap circuit TAP2. In an embodiment, the photodiode drain circuit PDC may correspond to various photodiode drain circuits of the above embodiments.

As illustrated in FIG. 17, the first and second output voltages Vout1 and Vout2 corresponding to the first and second storage nodes n_S1 and n_S2 of the first and second tap circuits TAP1 and TAP2 may be output through the individual column lines CL1 and CL2 by using the separate transfer gates TG1 and TG2 and separate readout circuits ROC1 and ROC2. In this case, when the first and second transfer signals TX1 and TX2 and the first and second selection signals SEL1 and SEL2 are simultaneously activated, the first and second output voltages Vout1 and Vout2 may be output through the first and second column lines CL1 and CL2 respectively and simultaneously.

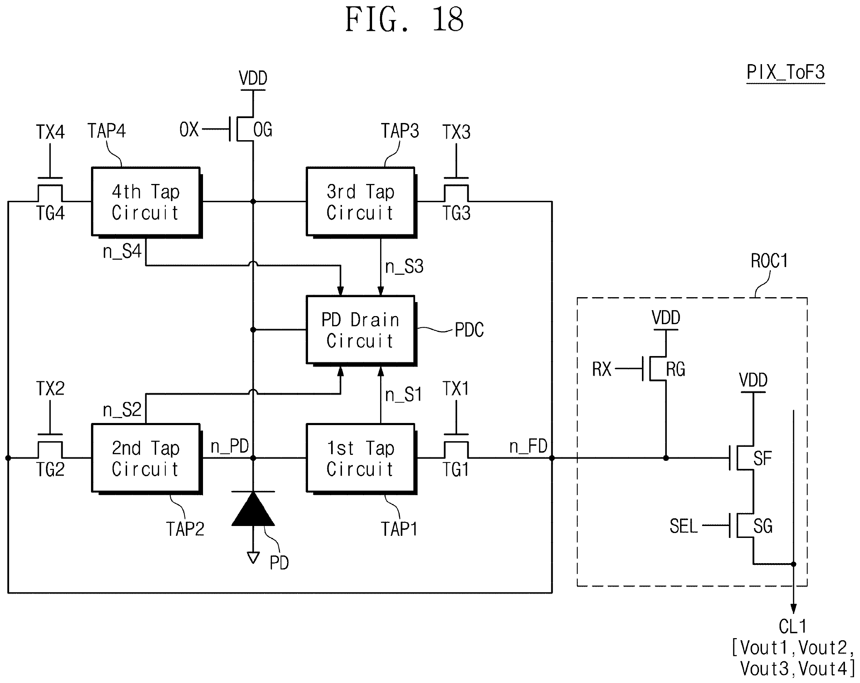

Referring to FIG. 18, in an embodiment, a third ToF pixel PIX_ToF3 may include the photodiode PD, the first tap circuit TAP1, the second tap circuit TAP2, a third tap circuit TAP3, a fourth tap circuit TAP4, the first transfer gate TG1, the second transfer gate TG2, a third transfer gate TG3, a fourth transfer gate TG4, the readout circuit ROC, the overflow gate OG, and the photodiode drain circuit PDC.

The first tap circuit TAP1 may be connected between the photodiode node n_PD and the first transfer gate TG1, the second tap circuit TAP2 may be connected between the photodiode node n_PD and the second transfer gate TG2, the third tap circuit TAP3 may be connected between the photodiode node n_PD and the third transfer gate TG3, and the fourth tap circuit TAP4 may be connected between the photodiode node n_PD and the fourth transfer gate TG4.

The first transfer gate TG1 may be connected between the first tap circuit TAP1 and the FD node n_FD and may operate in response to a first transfer signal TX1. The second transfer gate TG2 may be connected between the second tap circuit TAP2 and the FD node n_FD and may operate in response to a second transfer signal TX2. The third transfer gate TG3 may be connected between the third tap circuit TAP3 and the FD node n_FD and may operate in response to a third transfer signal TX3. The fourth transfer gate TG4 may be connected between the fourth tap circuit TAP4 and the FD node n_FD and may operate in response to a fourth transfer signal TX4.

The readout circuit ROC may include the source follower SF, the select gate SG, and the reset gate RG. The readout circuit ROC may be configured to output output voltages Vout1, Vout2, Vout3, and Vout4 corresponding to the level of the FD node n_FD in response to the selection signal SEL. The readout circuit ROC may be configured to reset the FD node n_FD with the level corresponding to the power supply voltage VDD in response to the reset signal RX.

For example, as the first transfer gate TG1 is turned on, photo charges stored in the first storage node n_S1 of the first tap circuit TAP1 may be transferred to the FD node n_FD. The readout circuit ROC may output the first output voltage Vout1 to the first column line CL1 in response to the photo charges transferred to the FD node n_FD. Afterwards, the readout circuit ROC may be configured to reset the FD node n_FD in response to the reset signal RX. Then, as the second transfer gate TG2 is turned on, photo charges stored in the second storage node n_S2 of the second tap circuit TAP2 may be transferred to the FD node n_FD. The readout circuit ROC may output the second output voltage Vout2 to the first column line CL1 in response to the photo charges transferred to the FD node n_FD. Likewise, as the third and fourth transfer gates TG3 and TG4 are sequentially turned on, photo charges stored in third and fourth storage nodes n_S3 and n_S4 of the third and fourth tap circuits TAP3 and TAP4 may be sequentially transferred to the FD node n_FD, and the readout circuit ROC may sequentially output the third and fourth output voltages Vout3 and Vout4 to the first column line CL1.

The overflow gate OG may be connected between the power supply voltage VDD and the photodiode node n_PD and may operate in response to the overflow signal OX.

The photodiode drain circuit PDC may detect the saturation states of the first to fourth storage nodes n_S1 to n_S4, based on the levels of the first to fourth storage nodes n_S1 to n_S4 of the first to fourth tap circuits TAP1 to TAP4. When at least one of the first to fourth storage nodes n_S1 to n_S4 is saturated, the photodiode drain circuit PDC may electrically connect the photodiode node n_PD with the power supply voltage VDD. In this case, the photo charges generated by the photodiode PD may be drained to the power supply voltage VDD and need not be transferred to the first to fourth storage nodes n_S1 to n_S4. In an embodiment, the photodiode drain circuit PDC of FIG. 18 may operate to be similar to the photodiode drain circuits described with reference to FIGS. 10 to 16 except that the photodiode drain circuit PDC of FIG. 18 detects the saturation states of four storage nodes n_S1 to n_S4 or may be implemented to be similar thereto.

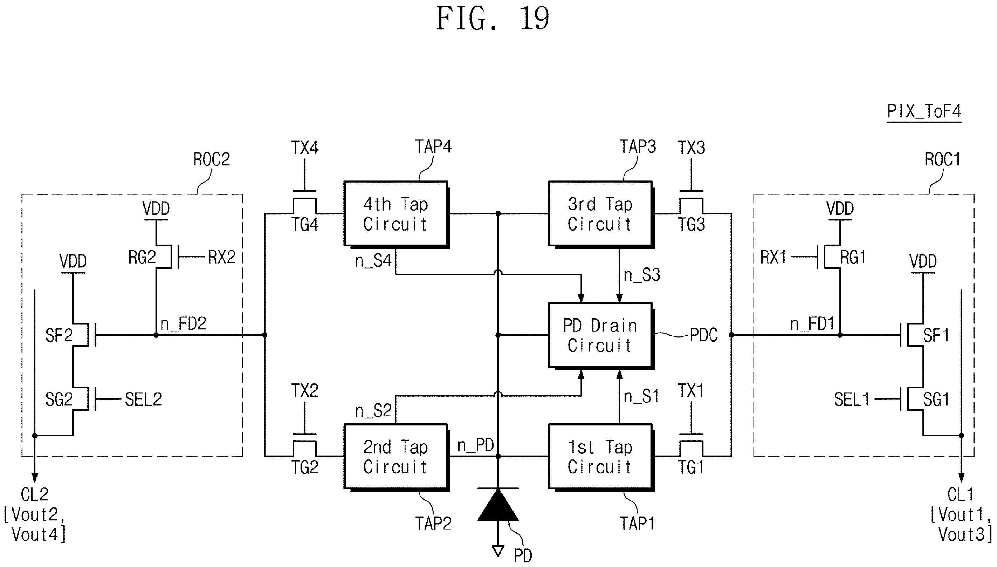

Referring to FIG. 19, in an embodiment, a fourth ToF pixel PIX_ToF4 may include the photodiode PD, the first to fourth tap circuits TAP1 to TAP4, the first to fourth transfer gates TG1 to TG4, the first and second readout circuits ROC1 and ROC2, the overflow gate OG, and the photodiode drain circuit PDC. For convenience of description, because the photodiode PD, the first to fourth tap circuits TAP1 to TAP4, the overflow gate OG, and the photodiode drain circuit PDC are similar to those described above, additional description will be omitted to avoid redundancy and for conciseness.

The first transfer gate TG1 may be connected between the first tap circuit TAP1 and the first FD node n_FD1 and may operate in response to the first transfer signal TX1. The second transfer gate TG2 may be connected between the second tap circuit TAP2 and the second FD node n_FD2 and may operate in response to the second transfer signal TX2. The third transfer gate TG3 may be connected between the third tap circuit TAP3 and the first FD node n_FD1 and may operate in response to the third transfer signal TX3. The fourth transfer gate TG4 may be connected between the fourth tap circuit TAP4 and the second FD node n_FD2 and may operate in response to the fourth transfer signal TX4.

The first readout circuit ROC1 may include the first source follower SF1, the first select gate SG1, and the first reset gate RG1. The first readout circuit ROC1 may output the first and third output voltages Vout1 and Vout3 through the first column line CL1 in response to the first selection signal SEL1. The first readout circuit ROC1 may reset the first FD node n_FD1 with the level corresponding to the power supply voltage VDD in response to the first reset signal RX1. For example, as the first transfer gate TG1 is turned on, photo charges stored in the first storage node n_S1 of the first tap circuit TAP1 may be transferred to the first FD node n_FD1. In response to the photo charges transferred to the first FD node n_FD1, the first readout circuit ROC1 may output the first output voltage Vout1 (i.e., a voltage corresponding to the photo charges of the first storage node n_S1) through the first column line CL1. Afterwards, the first readout circuit ROC1 may reset the first FD node n_FD1 in response to the first reset signal RX1.

Then, as the third transfer gate TG3 is turned on, photo charges stored in the third storage node n_S3 of the third tap circuit TAP3 may be transferred to the first FD node n_FD1. In response to the photo charges transferred to the first FD node n_FD1, the first readout circuit ROC1 may output the third output voltage Vout3 (i.e., a voltage corresponding to the photo charges of the third storage node n_S3) through the first column line CL1.

The second readout circuit ROC2 may include the second source follower SF2, the second select gate SG2, and the second reset gate RG2. The second readout circuit ROC2 may output the second and fourth output voltages Vout2 and Vout4 through the second column line CL2 in response to the second selection signal SEL2. The second readout circuit ROC2 may reset the second FD node n_FD2 with the level corresponding to the power supply voltage VDD in response to the second reset signal RX2. Because an operation of the second readout circuit ROC2 is similar to the operation of the first readout circuit ROC1 except that the second and fourth output voltages Vout2 and Vout4 are output through the second column line CL2, additional description will be omitted to avoid redundancy.

In the embodiment of FIG. 19, the first readout circuit ROC1 may sequentially output the first and third output voltages Vout1 and Vout3 corresponding to the first and third storage nodes n_S1 and n_S3 of the first and third tap circuits TAP1 and TAP3 through the first column line CL1. The second readout circuit ROC2 may sequentially output the second and fourth output voltages Vout2 and Vout4 corresponding to the second and fourth FD nodes n_S2 and n_S4 of the second and fourth tap circuits TAP2 and TAP4 through the second column line CL2. In this case, the first and second output voltages Vout1 and Vout2 may be output through the first and second column lines CL1 and CL2 respectively and simultaneously, and the third and fourth output voltages Vout3 and Vout4 may be output through the first and second column lines CL1 and CL2 respectively and simultaneously.

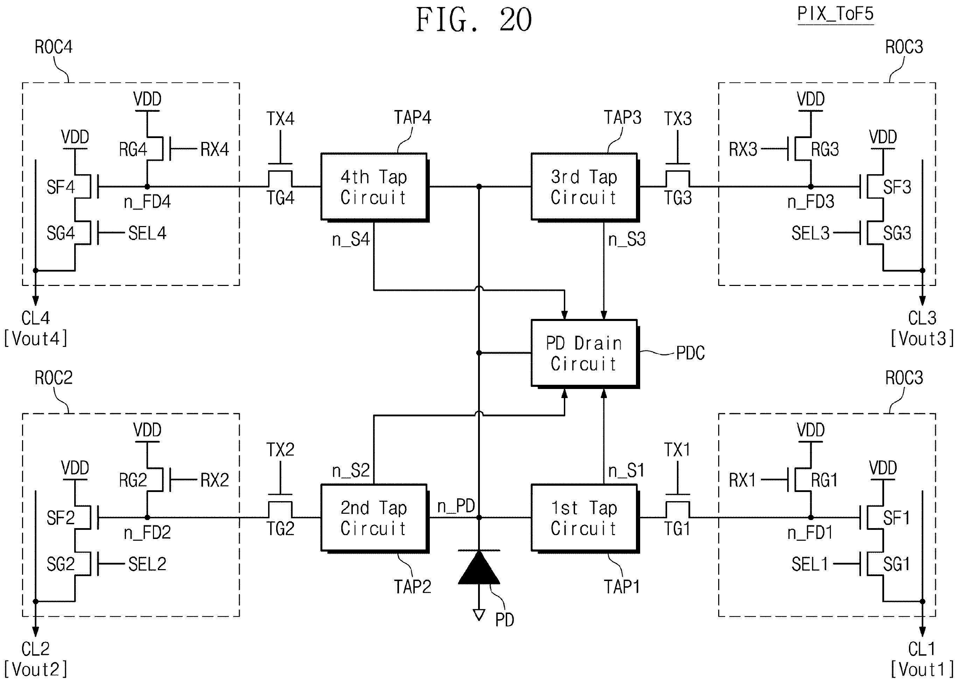

Referring to the FIG. 20, in an embodiment, a fifth ToF pixel PIX_ToF5 may include the photodiode PD, the first to fourth tap circuits TAP1 to TAP4, the first to fourth transfer gates TG1 to TG4, a first readout circuit ROC1, a second readout circuit ROC2, a third readout circuit ROC3, a fourth readout circuit ROC4, the overflow gate OG, and the photodiode drain circuit PDC. For convenience of description, because the photodiode PD, the first to fourth tap circuits TAP1 to TAP4, the overflow gate OG, and the photodiode drain circuit PDC are similar to those described above, additional description will be omitted to avoid redundancy and for conciseness.

The first transfer gate TG1 may be connected between the first tap circuit TAP1 and the first FD node n_FD1 and may operate in response to the first transfer signal TX1. The second transfer gate TG2 may be connected between the second tap circuit TAP2 and the second FD node n_FD2 and may operate in response to the second transfer signal TX2. The third transfer gate TG3 may be connected between the third tap circuit TAP3 and the third FD node n_FD3 and may operate in response to the third transfer signal TX3. The fourth transfer gate TG4 may be connected between the fourth tap circuit TAP4 and the fourth FD node n_FD4 and may operate in response to the fourth transfer signal TX4.

The first readout circuit ROC1 may include the first source follower SF1, the first select gate SG1, and the first reset gate RG1. The first readout circuit ROC1 may output the first output voltage Vout1 corresponding to the level of the first FD node n_FD1 through the first column line CL1 in response to the first selection signal SEL1. The first readout circuit ROC1 may reset the first FD node n_FD1 with the level corresponding to the power supply voltage VDD in response to the first reset signal RX1. In an embodiment, as the first transfer gate TG1 is turned on, photo charges stored in the first storage node n_S1 of the first tap circuit TAP1 may be transferred to the first FD node n_FD1. That is, the first output voltage Vout1 may correspond to the first storage node n_S1 of the first tap circuit TAP1.

The second to fourth readout circuits ROC2 to ROC4 may output the second to fourth output voltages Vout2 to Vout4 through second to fourth column lines CL2 to CL4 in response to the levels of the second to fourth FD nodes n_FD2 to n_FD4. An operation of each of the second to fourth readout circuits ROC2 to ROC4 is similar to the operation of the first readout circuit ROC1, and thus, additional description will be omitted to avoid redundancy.

In an embodiment of FIG. 20, the first to fourth output voltages Vout1 to Vout4 corresponding to the first to fourth storage nodes n_S1 to n_S4 of the first to fourth tap circuits TAP1 to TAP4 may be individually output through the first to fourth column lines CL1 to CL4 by controlling the first to fourth readout circuits ROC1 to ROC4. In this case, the first to fourth output voltages Vout1 to Vout4 may be output through the first to fourth column lines CL1 to CL4 respectively and simultaneously.

As described above, according to various embodiments, a ToF sensor may include a plurality of ToF pixels. Each of the plurality of ToF pixels may store photo charges generated based on a reflected light reflected from a target object in a plurality of storage nodes. In this case, when at least one of the plurality of storage nodes is saturated, each of the plurality of ToF pixels may connect a photodiode node with a power supply voltage such that the photo charges generated by the photodiode are drained to the power supply voltage. According to the above description, because the photo charges generated by the photodiode are not transferred to the plurality of storage nodes, the ratio of photo charges stored in the plurality of storage nodes (i.e., information about the phase difference or the distance "d") may be maintained.

In the above embodiments, some components of the ToF pixel are described, but the scope of the present disclosure is not limited thereto. For example, the ToF pixel may include a photodiode drain circuit configured to detect a saturation state of a storage node of each of "n" tap circuits (n being a natural number of 2 or more) and to drain photo charges generated by the photodiode in response to the detected saturation state. In this case, the photodiode drain circuit may be implemented in various forms described with reference to FIGS. 10 to 20 or may be implemented with any other circuits configured to perform the same/similar function.

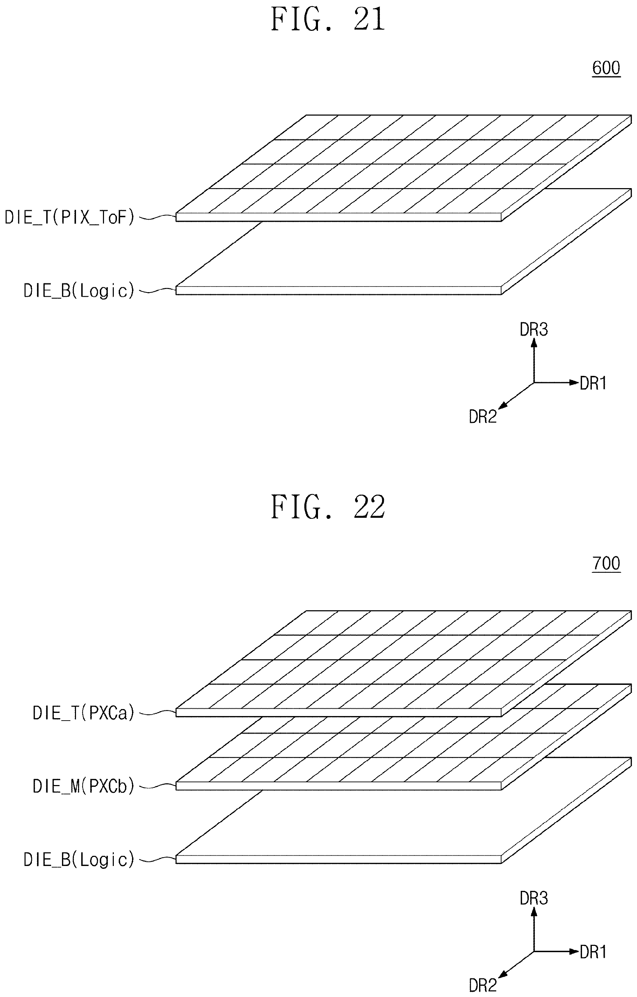

FIGS. 21 and 22 are diagrams illustrating a stacked structure of a ToF sensor, according to an embodiment. Referring to FIGS. 1 and 21, in an embodiment, a ToF sensor 600 may include a top semiconductor die DIE_T (for convenience of description, hereinafter, referred to as a "top die") and a bottom semiconductor die DIE_B (for convenience of description, hereinafter, referred to as a "bottom die"). The top die DIE_T may include the ToF pixel array 120 including a plurality of pixels PIX. For example, in an embodiment, the ToF pixel array 120 may include the first ToF pixel PIX_ToF1 of FIG. 6. The bottom die DIE_B may include the remaining components (e.g., the sensor controller 130 (refer to FIG. 1), an ADC, a logic circuit, and a light generator) other than the ToF pixel array 120.

Referring to FIGS. 1 and 22, a ToF sensor 700 may include a top semiconductor die DIE_T (for convenience of description, hereinafter, referred to as a "top die"), a middle semiconductor die DIE_M (for convenience of description, hereinafter, referred to as a "middle die"), and a bottom semiconductor die DIE_B (for convenience of description, hereinafter, referred to as a "bottom die").

The top die DIE_T may include a portion PCXa of a pixel circuit of each of the plurality of ToF pixels PIX_ToF, and the middle die DIE_M may include the remaining portion PCXb of the pixel circuit of each of the plurality of ToF pixels PIX_ToF. For example, the ToF pixel array 120 may include the first ToF pixel PIX_ToF1 of FIG. 6. In the first ToF pixel PIX_ToF1, the remaining components (e.g., PG1, STG1, TG1, PG2, STG2, TG2, TG, SF, SG, OG, and PDC) other than the photodiode PD may constitute a pixel circuit of the first ToF pixel PIX_ToF1. The portion PCXa of the pixel circuit of the first ToF pixel PIX_ToF1 and the photodiode PD may be formed in the top die DIE_T, and the remaining portion PCXb of the pixel circuit of the first ToF pixel PIX _ToF1 may be formed in the middle die DIE_M. The bottom die DIE_B may include the remaining components (e.g., an ADC and a logic circuit) other than the ToF pixel array 120.

The top die DIE_T, the middle die DIE_M, and the bottom die DIE_B may be stacked based on various methods such as a combination of C2C bonding, a through hole, and a metal pad.

In an embodiment, the emission light EL and the reflected light RL may have an infrared waveform, and the ToF pixels may further include a micro lens and an infrared filter for receiving the reflected light RL efficiently. The micro lens and the infrared filter may be formed on the top die DIE_T in which the photodiode PD is formed.

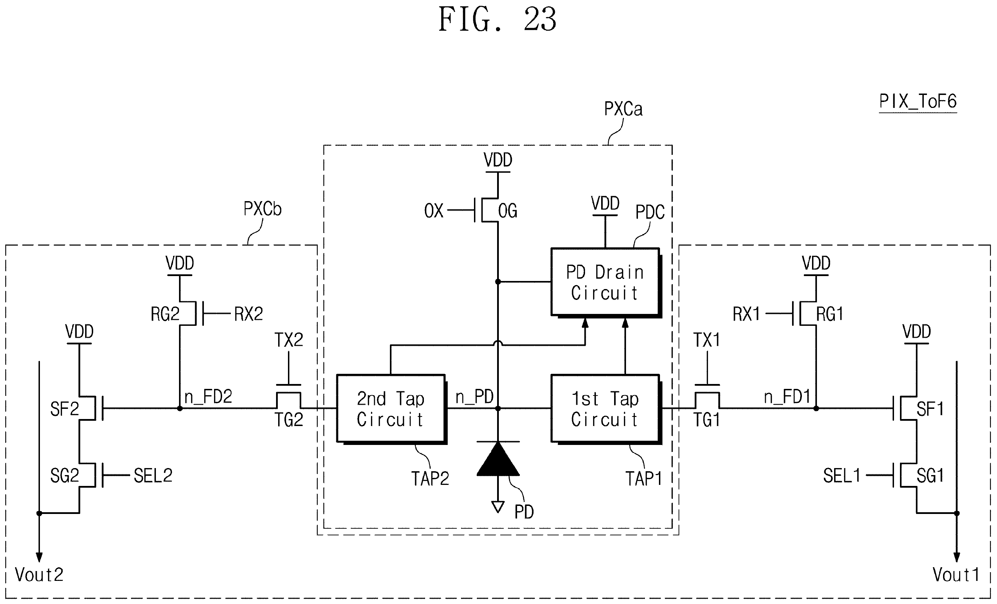

FIG. 23 is a diagram illustrating the ToF pixel included in the ToF sensor having a stacked structure of FIG. 22, according to an embodiment. Referring to FIGS. 22 and 23, in an embodiment, a sixth ToF pixel PIX_ToF6 may include the photodiode PD, the first tap circuit TAP1, the second tap circuit TAP2, the first readout circuit ROC1, the second readout circuit ROC2, the overflow gate OG, and the photodiode drain circuit PDC. The sixth ToF pixel PIX_ToF6 of FIG. 23 is similar to the second ToF pixel PIX_ToF2 of FIG. 17, and thus, additional description will be omitted to avoid redundancy and for conciseness.

In an embodiment, some components of the sixth ToF pixel PIX_ToF6 may be formed in the top die DIE_T, and the remaining components thereof may be formed in the middle die DIE_M. For example, the photodiode PD, the first tap circuit TAP1, the second tap circuit TAP2, the overflow gate OG, and the photodiode drain circuit PDC may be included in an a-th pixel circuit PXCa, and the a-th pixel circuit PXCa may be formed in the top die DIE_T. The remaining components (e.g., TG1, RG1, SF1, SG1, TG2, RG2, SF2, and SG2) may be included in a b-th pixel circuit PXCb, and the b-th pixel circuit PXCb may be formed in the middle die DIE_M. In this case, the a-th pixel circuit PXCa and the b-th pixel circuit PXCb may be electrically connected through the C2C bonding. For example, the first storage node n_S1 of the first tap circuit TAP1 and the first transfer gate TG1 may be electrically connected through the C2C bonding, and the second storage node n_S2 of the second tap circuit TAP2 and the second transfer gate TG2 may be electrically connected through the C2C bonding.

The embodiment of FIG. 23 is provided as an example, and the scope of the present disclosure is not limited thereto. For example, the components of the ToF pixel may be variously distributed into the a-th and b-th pixel circuits PXCa and PXCb.

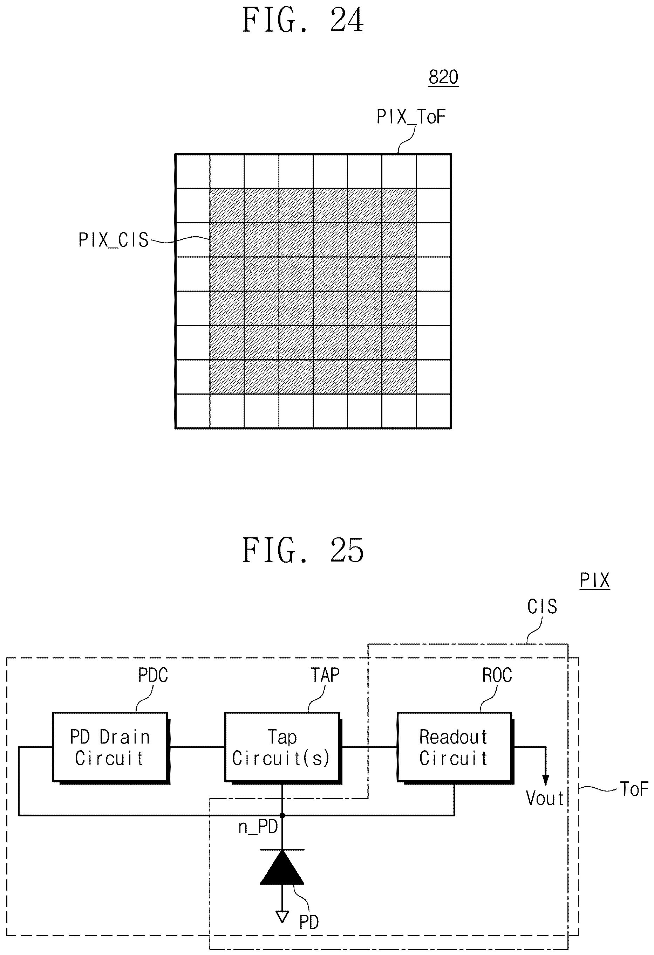

FIG. 24 is a diagram illustrating a pixel array according to embodiment. Referring to FIG. 24, in an embodiment, a pixel array 820 may include a plurality of pixels. The plurality of pixels may include the ToF pixel PIX_ToF and a CIS pixel PIX_CIS. For example, the CIS pixels PIX_CIS of the pixel array 820 may be configured to obtain image information about an exterior panorama. The ToF pixels PIX_ToF of the pixel array 820 may be configured to detect a distance of a target object placed in the exterior panorama. For example, the ToF pixels may include the first ToF pixel PIX_ToF1 of FIG. 6. In an embodiment, the ToF pixels PIX_ToF may be placed on an edge portion on the pixel array 820, and the CIS pixels PIX_CIS may be placed on a central portion of the pixel array 820. However, the scope of the present disclosure is not limited thereto.

FIG. 25 is a block diagram illustrating a pixel according to an embodiment. Referring to FIG. 25, the pixel PIX may include the photodiode PD, the tap circuits TAP, the readout circuit ROC, and a photodiode drain circuit PDC.

In an embodiment, depending on an operation mode, the pixel PIX may operate in a CIS mode or a ToF mode. For example, in the CIS mode, the pixel PIX may output the output voltage Vout corresponding to the light incident from the outside by using the photodiode PD and the readout circuit ROC. That is, in the CIS mode, the pixel PIX may operate like the CIS pixel by using the photodiode PD and the readout circuit ROC. In the ToF mode, by using the photodiode PD, the tap circuits TAP, the readout circuit ROC, and the photodiode drain circuit PDC, the pixel PIX may accumulate photo charges corresponding to a reflected light incident from the outside in the tap circuits TAP and may output the output voltage Vout corresponding to the tap circuits TAP. That is, in the ToF mode, the pixel PIX may operate like the ToF pixel.

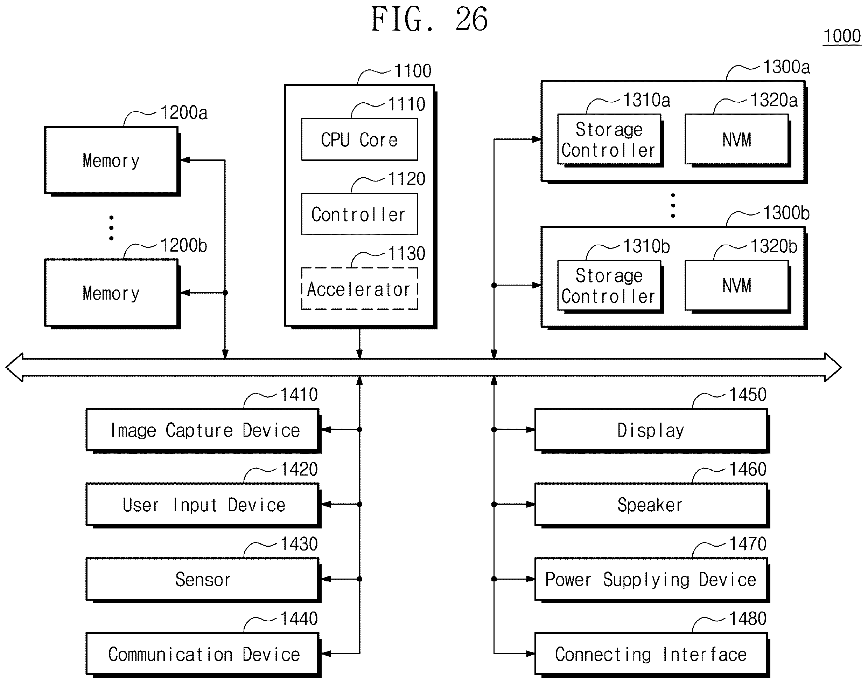

FIG. 26 is a diagram of a system 1000 to which a ToF sensor is applied, according to an embodiment. The system 1000 of FIG. 26 may basically be a mobile system, such as a portable communication terminal (e.g., a mobile phone), a smartphone, a tablet personal computer (PC), a wearable device, a healthcare device, or an Internet of things (IOT) device. However, the system 1000 of FIG. 26 is not limited to the mobile system and in some embodiments, the system 1000 may be a PC, a laptop computer, a server, a media player, or an automotive device (e.g., a navigation device).

Referring to FIG. 26, the system 1000 may include a main processor 100, memories (e.g., 200a and 200b), and storage devices (e.g., 1300a and 1300b). The system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, more specifically, operations of other components included in the system 1000. The main processor 1100 may be implemented as a general-purpose processor, a dedicated processor, or an application processor.

The main processor 1100 may include at least one CPU core 1110 and further include a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU) and be implemented as a chip that is physically separate from the other components of the main processor 1100.

The memories 1200a and 1200b may be used as main memory devices of the system 1000. Although each of the memories 1200a and 1200b may include a volatile memory, such as static random access memory (SRAM) and/or dynamic RAM (DRAM), each of the memories 1200a and 1200b may include non-volatile memory, such as a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and NVMs (Non-Volatile Memories) 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as PRAM and/or RRAM.

The storage devices 1300a and 1300b may be physically separated from the main processor 1100 and included in the system 1000 or implemented in the same package as the main processor 1100. In addition, the storage devices 1300a and 1300b may have types of solid-state devices (SSDs) or memory cards and be removably combined with other components of the system 1000 through an interface, such as the connecting interface 1480 that will be described below. The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include a camera, a camcorder, and/or a webcam.

The user input device 1420 may receive various types of data input by a user of the system 1000 and include a touch pad, a keypad, a keyboard, a mouse, and/or a microphone.

The sensor 1430 may detect various types of physical quantities, which may be obtained from the outside of the system 1000, and convert the detected physical quantities into electric signals. The sensor 1430 may include a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery (not shown) embedded in the system 1000 and/or an external power source, and supply the converted power to each of components of the system 1000.

The connecting interface 1480 may provide connection between the system 1000 and an external device, which is connected to the system 1000 and capable of transmitting and receiving data to and from the system 1000. The connecting interface 1480 may be implemented by using various interface schemes, such as advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In an embodiment, the sensor 1430 may include the ToF sensor described with reference to FIGS. 1 to 25. The sensor 1430 may operate based on the operation method described with reference to FIGS. 1 to 25. For example, the sensor 1430 may include a plurality of ToF pixels. Each of the plurality of ToF pixels may be configured to drain photo charges generated by the photodiode based on the saturation state of the storage node. According to the above description, even though the storage node is saturated, the photo charge ratio of the storage nodes included in each of the plurality of ToF pixels (i.e., distance information or photo charge information) may be maintained. Accordingly, a ToF sensor with improved performance and improved reliability is provided.

According to the present disclosure, a ToF pixel may store or accumulate photo charges corresponding to a reflected light reflected from a target object in a plurality of storage nodes. In this case, when at least one of the plurality of storage nodes is saturated, the ToF pixel may drain the photo charges generated by a photodiode to a power supply voltage. In this case, the photo charges need not be transferred to the plurality of storage nodes, and thus, a ratio of photo charges stored in the plurality of storage nodes may be maintained. That is, a distance to the target object may be normally detected in a state where at least one of the plurality of storage nodes is saturated. This means that a distance range capable of being identified by the ToF pixel or the ToF sensor is increased. Accordingly, a ToF pixel having improved reliability and improved performance, a ToF sensor including the ToF pixel, and an operation method of the ToF sensor are provided.

While various embodiments have been described with reference to the drawings thereof, it will be apparent to those of ordinary skill in the art that various changes and modifications may be made thereto without departing from the scope of the present disclosure as set forth in the following claims.

## Claims

1. A time of flight, ToF, pixel comprising:
a photodiode (PD) configured to receive a reflected light and to generate photo charges based on the reflected light;
a first tap circuit (TAP1) connected to the photodiode (PD) and including a first storage node (n_S1) that stores the photo charges during a first time period;
a second tap circuit (TAP2) connected to the photodiode (PD) and including a second storage node (n_S2) that stores the photo charges during a second time period different from the first time period;
a first transfer gate (TG1) connected to the first tap circuit (TAP1), and configured to operate based on a first transfer signal (TX1);
a second transfer gate (TG2) connected to the second tap circuit (TAP2), and configured to operate based on a second transfer signal (TX2);
a first readout circuit (ROC) connected to the first transfer gate (TG1), and configured to output a first output voltage (Vout1) corresponding to a level of the first storage node (n_S1); and
a photodiode drain circuit (PDC) configured to electrically connect the photodiode (PD) with a power supply voltage (VDD) based on the level of the first storage node (n_S1) and a level of the second storage node (n_S2).

2. The ToF pixel of claim 1, wherein the photodiode drain circuit (PDC) is configured to:
detect a saturation state of at least one of the first storage node (n_S1) or the second storage node (n_S2) based on a corresponding one of the level of the first storage node (n_S1) or the level of the second storage node (n_S2); and
connect the photodiode (PD) with the power supply voltage (VDD) based on the saturation state that is detected.

3. The ToF pixel of claim 1 or 2, wherein the first readout circuit (ROC) is further configured to be connected to the second transfer gate (TG2) and to output a second output voltage (Vout2) corresponding to the level of the second storage node (n_S2).

4. The ToF pixel of claim 1, 2 or 3, wherein the first readout circuit (ROC) includes:
a first floating diffusion, FD, node (FD) connected to the first transfer gate (TG1);
a reset gate (RG) that is connected between the power supply voltage (VDD) and the first FD node (FD) and operates based on a reset signal (RX);
a source follower (SF) that is connected to the power supply voltage (VDD) and the first FD node (FD) and operates based on a level of the first FD node (FD); and
a select gate (SG) that is connected between the first FD node (FD) and a first column line (CL1) and operates based on a selection signal (SEL).

5. The ToF pixel of any one of claims 1 to 4, further comprising:
a second readout circuit (ROC2) connected to the second transfer gate (TG2),
wherein the second readout circuit (ROC2) is configured to output a second output voltage (Vout2) corresponding to the level of the second storage node (n_S2).

6. The ToF pixel of any one of claims 1 to 5, wherein the first tap circuit (TAP1) includes:
a first photo gate (PG1) that is connected to the photodiode (PD) and operates based on a first photo signal (PX1); and
a first storage transfer gate (STG1) that is connected between the first photo gate (PG1) and the first transfer gate (TG1) and operates based on a first storage transfer signal (STX1),
wherein the first storage node (n_S1) is between the first storage transfer gate (STG1) and the first transfer gate (TG1),
wherein the second tap circuit (TAP2) includes:
a second photo gate (PG2) that is connected to the photodiode (PD) and operates based on a second photo signal (PX2); and
a second storage transfer gate (STG1) that is connected between the second photo gate (PG2) and the second transfer gate (TG2) and operates based on a second storage transfer signal (STX2), and
wherein the second storage node (n_S2) is between the second storage transfer gate (STG2) and the second transfer gate (TG2).

7. The ToF pixel of any one of claims 1 to 6, further comprising:
an overflow gate (OG) that is connected between the power supply voltage (VDD) and the photodiode (PD) and operates based on an overflow signal (OX).

8. The ToF pixel of any one of claims 1 to 7, wherein the photodiode drain circuit (PDC) includes:
a first drain gate (DG1) that is connected to the power supply voltage (VDD) and the photodiode (PD) and operates based on the level of the first storage node (n_S1); and
a second drain gate (DG2) that is connected between the power supply voltage (VDD) and the photodiode (PD) and operates based on the level of the second storage node (n_S2).

9. The ToF pixel of any one of claims 1 to 7, wherein the photodiode drain circuit (PDC) includes:
a first PMOS transistor (MPla) that is connected between the power supply voltage (VDD) and a first output node and operates based on the level of the first storage node (n_S1);
a first NMOS transistor (MN1a) that is connected between the first output node and a ground voltage and operates based on the level of the first storage node (n_S1);
a first drain gate (DG1a) that is connected to the power supply voltage (VDD) and the photodiode (PD) and operates based on a level of the first output node;
a second PMOS transistor (MP2a) that is connected between the power supply voltage (VDD) and a second output node and operates based on the level of the second storage node (n_S2);
a second NMOS transistor (MN2a) that is connected between the second output node and the ground voltage and operates based on the level of the second storage node (n_S2); and
a second drain gate (DG2a) that is connected between the power supply voltage (VDD) and the photodiode (PD) and operates based on a level of the second output node.

10. The ToF pixel of any one of claims 1 to 7, wherein the photodiode drain circuit (PDC) includes:
a first resistor (R1) connected between the power supply voltage (VDD) and a first output node;
a first NMOS transistor (MN1b) that is connected between the first output node and a ground voltage and operates based on the level of the first storage node (n_S1);
a first drain gate (DG1b) that is connected to the power supply voltage (VDD) and the photodiode (PD) and operates based on a level of the first output node;
a second resistor (R2) connected between the power supply voltage (VDD) and a second output node;
a second NMOS transistor (MN2b) that is connected between the second output node and the ground voltage and operates based on the level of the second storage node (n_S2); and
a second drain gate (DG2b) that is connected between the power supply voltage (VDD) and the photodiode (PD) and operates based on a level of the second output node.

11. The ToF pixel of any one of claims 1 to 7, wherein the photodiode drain circuit (PDC) includes:
a first PMOS transistor (MP1c) that is connected between the power supply voltage (VDD) and a first output node and operates based on the level of the first storage node (n_S1);
a second PMOS transistor (MP2c) that is connected between the power supply voltage (VDD) and the first output node and operates based on the level of the second storage node (n_S2);
a first NMOS transistor (MN1c) that is connected between the first output node and a second node and operates based on the level of the second storage node (n_S2);
a second NMOS transistor (MN2c) that is connected between the second node and a ground voltage and operates based on the level of the first storage node (n_S1); and
a drain gate (DGc) that is connected between the power supply voltage (VDD) and the photodiode (PD) and operates based on a level of the first output node.

12. The ToF pixel of any one of claims 1 to 11, wherein the first tap circuit (TAP1) includes a first electrode (E1) on the first storage node (n_S1),
wherein the second tap circuit (TAP2) includes a second electrode (E2) on the second storage node (n_S2), and
wherein the photodiode drain circuit (PDC) is further configured to:
receive the level of the first storage node (n_S1) through the first electrode (E1);
and
receive the level of the second storage node (n_S2) through the second electrode (E2).

13. The ToF pixel of claim 12, wherein the photodiode drain circuit (PDC) includes:
a first initialization gate (IG1d) that is connected between the power supply voltage (VDD) and the first electrode (E1) and operates based on a first initialization signal (IX1d); and
a second initialization gate (IG2d) that is connected between the power supply voltage (VDD) and the second electrode (E2) and operates based on a second initialization signal (IX2d).

14. The ToF pixel of any one of claims 1 to 13, further comprising:
a third tap circuit (TAP3) that is connected to the photodiode (PD) and includes a third storage node (n_S3) that stores the photo charges during a third time period different from the first time period and the second time period;
a fourth tap circuit (TAP4) that is connected to the photodiode (PD) and includes a fourth storage node (n_S4) that stores the photo charges during a fourth time period different from the first time period, the second time period and the third time period;
a third transfer gate (TG3) that is connected to the third tap circuit (TAP3) and operates based on a third transfer signal (TX3); and
a fourth transfer gate (TG4) that is connected to the fourth tap circuit (TAP4) and operates based on a fourth transfer signal (TX4), and
wherein the photodiode drain circuit (PDC) is configured to electrically connect the photodiode (PD) with the power supply voltage (VDD) based on a level of at least one of the first storage node (n_S1), the second storage node (n_S2), the third storage node (n_S3), or the fourth storage node (n_S4).

15. The ToF pixel of any one of claims 1 to 14, wherein the ToF pixel operates based on an indirect ToF manner.
